(19) **Europäisches Patentamt / European Patent Office / Office européen des brevets**

(11) **EP 2 235 558 B1**

(12) # FASCICULE DE BREVET EUROPEEN

(45) Date de publication et mention de la délivrance du brevet:
**24.04.2013 Bulletin 2013/17**

(21) Numéro de dépôt: **08852320.4**

(22) Date de dépôt: **03.09.2008**

(51) Int Cl.:
***G01S 5/22*** *(2006.01)*

(86) Numéro de dépôt international:
**PCT/FR2008/001227**

(87) Numéro de publication internationale:
**WO 2009/066012 (28.05.2009 Gazette 2009/22)**

(54) **PROCÉDÉ DE TRAJECTOGRAPHIE ROBUSTE EN TEMPS RÉEL SUR ORDINATEUR PORTABLE, DE UN OU PLUSIEURS CÉTACÉS PAR ACOUSTIQUE PASSIVE**

ROBUSTES ECHTZEITVERFAHREN ZUR BESTIMMUNG DER BEWEGUNGSBAHN EINES ODER MEHRERER WALE MITHILFE PASSIVER AKUSTIK UND EINES LAPTOP-COMPUTERS

REAL-TIME ROBUST METHOD FOR DETERMINING THE TRAJECTORY OF ONE OR MORE CETACEANS BY MEANS OF PASSIVE ACOUSTICS, USING A LAPTOP COMPUTER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **03.09.2007 FR 0706162**

(43) Date de publication de la demande:
**06.10.2010 Bulletin 2010/40**

(73) Titulaire: **Université du Sud Toulon-Var
83957 La Garde Cedex 20 (FR)**

(72) Inventeurs:
* **CAUDAL, Frédéric
F-83440 Montauroux (FR)**
* **GLOTIN, Hervé, Gilles, Pierre
F-83130 La Garde (FR)**
* **GIRAUDET, Pascale Véronique
F-83130 La Garde (FR)**

(74) Mandataire: **Scheer, Luc
Global Inventions
38, Allée Valériane- Domaine de la Tour
83700 Saint-Raphael (FR)**

(56) Documents cités:
**US-A- 5 563 849**

* **GIRAUDET ET AL: "Real-time 3D tracking of whales by echo-robust precise TDOA estimates with a widely-spaced hydrophone array" APPLIED ACOUSTICS, ELSEVIER PUBLISHING, GB, vol. 67, no. 11-12, novembre 2006 (2006-11), pages 1106-1117, XP005613741 ISSN: 0003-682X**
* **MORRISSEY ET AL: "Passive acoustic detection and localization of sperm whales (Physeter macrocephalus) in the tongue of the ocean" APPLIED ACOUSTICS, ELSEVIER PUBLISHING, GB, vol. 67, no. 11-12, novembre 2006 (2006-11), pages 1091-1105, XP005613740 ISSN: 0003-682X**
* **GIRAUDET P ET AL: "Echo-Robust and Real-Time 3D Tracking of Marine Mammals Using Their Transient Calls Recorded by Hydrophones Array" ACOUSTICS, SPEECH AND SIGNAL PROCESSING, 2006. ICASSP 2006 PROCEEDINGS. 2006 IEEE INTERNATIONAL CONFERENCE ON TOULOUSE, FRANCE 14-19 MAY 2006, PISCATAWAY, NJ, USA,IEEE, 14 mai 2006 (2006-05-14), pages IV-1161, XP010931257 ISBN: 1-4244-0469-X**
* **SHI-HUANG CHEN ET AL: "A wavelet-based voice activity detection algorithm in noisy environments" ELECTRONICS, CIRCUITS AND SYSTEMS, 2002. 9TH INTERNATIONAL CONFERENCE ON SEP. 15-18, 2002, PISCATAWAY, NJ, USA,IEEE, vol. 3, 15 septembre 2002 (2002-09-15), pages 995-998, XP010614519 ISBN: 0-7803-7596-3**

**(Cont. page suivante)**

- **PHILIPPE COURMONTAGNE ET AL: "The Adaptive Stochastic Matched Filter for SAS Images denoising" OCEANS 2006, IEEE, PI, 1 septembre 2006 (2006-09-01), pages 1-6, XP031046375 ISBN: 978-1-4244-0114-7**
- **ROGERS C: "High resolution analysis of bird sounds" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA, IEEE, US, vol. 5, 9 mai 1995 (1995-05-09), pages 3011-3014, XP010151978 ISBN: 0-7803-2431-5**

**Description**

La présente invention concerne un procédé de trajectographie robuste d'une pluralité de X cétacés par acoustique passive, en utilisant un ensemble de Y capteurs.

Par extension, la présente invention concerne un procédé de trajectographie par voie passive, d'une ou de plusieurs sources se déplaçant dans un milieu quelconque et émettant un signal non stationnaire.

A titre d'exemple concret, l'invention sera décrite dans le cadre de son application à la problématique de la détection de mammifères marins capables d'émettre des signaux sous forme de clics, mais il est bien entendu que l'invention s'applique à d'autres types de sources de signaux non stationnaires, et à d'autres milieux de propagation.

ETAT DE LA TECHNIQUE :

On connaît déjà dans l'état de la technique plusieurs procédés de suivi des trajectoires de cétacés. On distingue généralement les procédés de détection actifs, qui consistent à envoyer vers la source un signal, notamment sonore, et à capter l'écho de ce signal lorsqu'il rencontre la source. Ces procédés ne sont pas recommandés, car la puissance du signal est néfaste à la fois pour le cétacé recherché, et pour son environnement.

On distingue par ailleurs les procédés de détection passifs, qui consistent à simplement capter des signaux avec des capteurs adaptés (dans le cas des cétacés il s'agit de signaux sonores qui peuvent être captés à l'aide d'hydrophones immergés), puis on traite les signaux reçus en vue de déterminer les caractéristiques et la position de la source.

Les procédés de détection passifs sont bien plus satisfaisants dans leur principe (aucune perturbation du milieu).

Un tel procédé est par exemple divulgué dans "Real-time 3D tracking of whales by echo-robust precise TDOA estimates with a widely-spaced hydrophone array" de Giraudet P. et Glotin H.

D'autres tentatives ont été faites pour mettre au point un procédé de détection de cétacés par voie passive, sur la base d'algorithmes de traitement des différences de temps d'arrivée aux hydrophones des clics captés par des hydrophones, ces différences étant appelées des « TDOA », acronyme pour « Time Différence Of Arrival » en terminologie anglo-saxonne.

Parmi les méthodes essayées, on compte les algorithmes de détection dits de Morissey et al., celui de Nozal et Frazer, ou celui de White et al., qui ont tous été abondamment décrits dans la littérature scientifique.

INCONVENIENTS DE l'ETAT DE LA TECHNIQUE :

En résumé, les méthodes précitées comportent toutes au moins un inconvénient majeur parmi la liste qui suit :

-   soit il s'agit de méthodes qui ne sont pas passives et par conséquent elles nécessitent l'envoi de signaux vers les cétacés, ce qui relève des méthodes actives qui sont préjudiciables aux animaux.

-   soit elles ne sont pas industrialisées, et nécessitent le concours de méthodes visuelles lorsque les cétacés remontent en surface, et toutes ne fonctionnent que pour le suivi approximatif d'un seul cétacé isolé et donc dans des conditions acoustiques idéales.

-   soit elles requièrent un profil de célérité du son dans l'eau de mer à l'endroit de la détection, et ces profils ne sont en général pas disponibles, ou alors ils ne sont pas à jour, sachant que la célérité du

son varie en fonction du temps et des saisons, ce qui fausse les résultats des méthodes de détection connues.

-   soit encore elles font appel à des algorithmes de traitement du signal très lourds (temps fréquence par exemple), nécessitant une grosse puissance de calcul, et c'est le cas des algorithmes cités ci-dessus, ce qui a pour conséquence que la détection, même d'une seule baleine, ne peut pas se faire en temps réel ni quasi-réel.

BUTS DE L'INVENTION :

Un but de l'invention est par conséquent de proposer un procédé de détection et de trajectographie de cétacés par voie passive, qui soit à même de résoudre les problèmes posés par les procédés connus dans l'état de la technique.

En particulier, un but de l'invention est de proposer un procédé et un système qui permettent de trajectographier et de compter des cétacés, même en groupes, et de les identifier, ce qui implique de séparer les signaux de plusieurs cétacés émettant des clics simultanément dans une zone de plusieurs kilomètres cubes.

Un autre but de l'invention est d'obtenir le résultat précité sans avoir besoin d'un profil de célérité du son dans l'eau.

Un autre but de l'invention est de proposer un procédé de détection qui permette une détection rapide, en temps réel.

Un autre but de l'invention est de proposer un procédé de détection qui soit facile à mettre en oeuvre en pratique, même avec du matériel à bas coût.

Un autre but de l'invention est de proposer un procédé et un système de détection qui soient robustes aux échos, et qui donnent des résultats précis et fiables, quels que soient le milieu et les sources considérées.

Un but supplémentaire de l'invention est de proposer un procédé et un système de détection par voie passive, qui permettent l'application à l'étiquetage des émissions acoustiques des animaux, ce qui doit permettre l'étude fine de leurs caractéristiques telles que leur taille, sexe, âge,

groupe, dialecte, et leurs interactions comportementales.

A cet effet, l'invention a pour objet un procédé de trajectographie par voie passive tel que défini dans les revendications, ainsi qu'un système pour la mise en oeuvre d'un tel procédé.

Les caractéristiques et avantages de l'invention apparaîtront à la lecture de la description détaillée des dessins annexés dans lesquels :

- la figure 1 illustre un organigramme général du procédé de trajectographie selon l'invention ;
- la figure 2 illustre le principe de la transitivité des TDOA ;
- les figures 3.1, 3.2 et 3.3 représentent respectivement un clic d'une seule baleine sur le signal brut, ce même clic après filtrage avec l'opérateur de Teager-Kaiser et enfin le clic après filtrage et décimation;
- les figures 4.1 et 4.2 représentent respectivement le signal brut correspondant à plusieurs clics d'une seule baleine, avant et après filtrage par Teager-Kaiser, mais sans traitement de décimation ;
- la figure 5 représente le signal de la figure 4.1 après une étape de filtrage selon l'algorithme de Teager Kaiser et décimation ;
- la figure 6.1 représente le signal de la figure 4.1 après une étape de filtrage supplémentaire selon l'algorithme de Mallat suivi d'une opération de racine carrée sur le signal ;
- la figure 6.2 représente le signal de la figure 4.1 après un filtrage stochastique (FAS) ;
- la figure 6.3 représente le signal de la figure 6.2 après grossissement d'un clic et d'un écho ;
- la figure 7 illustre le principe du calcul des TDOA par intercorrélation, sur la base du signal réel d'une seule baleine;
- la figure 8.1 illustre le principe de détection des échos par intercorrélation, appliqué au signal de la figure 7;
- la figure 8.2 illustre le signal absolu d'un écho ;
- la figure 8.3 illustre le signal de la figure 8.2 moyenné ;
- la figure 8.4 illustre le signal absolu d'un clic ;
- la figure 9 représente un signal brut reçu des hydrophones, contenant un train de clics de plusieurs baleines, avec du bruit;
- la figure 10 représente les positions successives en (x,y,z) et en vue de dessus en fonction du temps de quatre baleines détectées selon le procédé de l'invention, pour un premier nombre de TDOA gardés;
- la figure 11 représente les positions successives en (x,y,z) et en vue de dessus en fonction du temps de quatre baleines détectées, pour un autre nombre de TDOA gardés ;
- la figure 12 représente les trajectoires de la figure 10, après une étape de lissage ;
- la figure 13 représente un organigramme de procédé permettant d'exploiter les positions obtenues des baleines, pour leur étude comportementale.

PRINCIPE DE L'INVENTION :

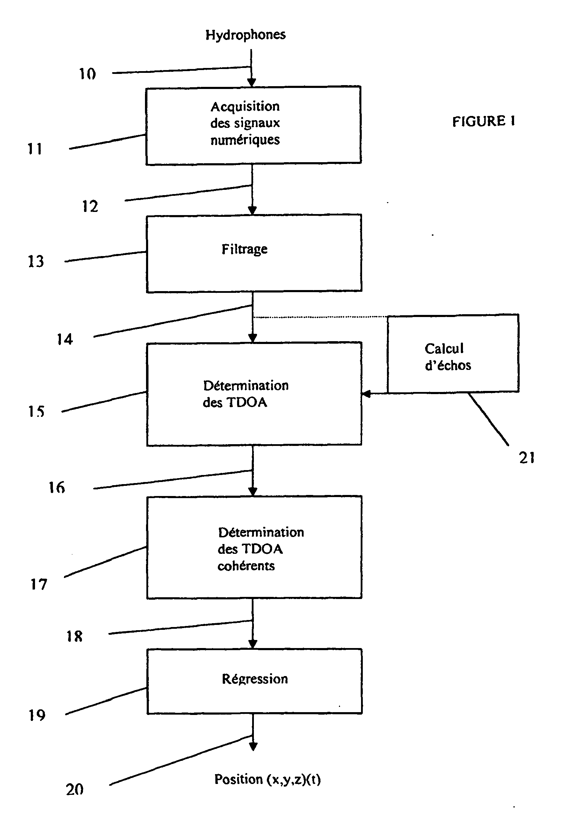

On se réfère à la figure 1. Dans cette figure, on a représenté un organigramme fonctionnel du procédé selon l'invention. Plusieurs hydrophones étant disposés dans l'eau dans la zone où l'on veut détecter la présence et la position de cétacés, on capte en 10 de manière connue les signaux analogiques délivrés par les hydrophones. Ces signaux correspondent aux différents signaux et bruits acoustiques présents dans le milieu. L'étape 11 d'acquisition et de numérisation des signaux en provenance des hydrophones se fait par exemple à l'aide de cartes électroniques d'acquisition connectées à un ordinateur, notamment un ordinateur portable classique. Mais il est également possible que chaque hydrophone soit directement pourvu de moyens de numérisation des signaux acoustiques, auquel cas les signaux reçus des hydrophones seraient des signaux numérisés, directement exploitables par un ordinateur.

L'invention prévoit que les signaux numériques délivrés en 12 à un ordinateur, soient soumis à une étape de filtrage 13 particulière, en vue d'isoler les signaux utiles dus aux clics du bruit de fond. Cette étape de filtrage particulière est critique pour le fonctionnement du procédé selon l'invention, et sera décrite plus en détail plus loin.

A la sortie 14 de l'étape de filtrage 13, on récupère un signal propre, dépourvu de bruit, et dont les pics correspondent aux trains de clics émis par les baleines éventuellement présentes dans une zone surveillée.

Il est possible cependant que certains des pics du signal en 14 correspondent à des échos des clics des baleines, par réverbération à la surface ou au fond de la mer par exemple. Dans une variante optionnelle plus perfectionnée, le procédé selon l'invention prévoit en 21 une étape de calcul et de suppression des échos.

A partir du signal propre contenant les pics correspondant aux trains de clics des baleines, on détermine en 15 les TDOA des clics, ce qui permet d'obtenir en 16 un ensemble de TDOA des clics des baleines, mais sans que l'on sache encore dire quels TDOA correspondent à une même source, ce qui permettrait de localiser cette source par un procédé de triangulation / régression.

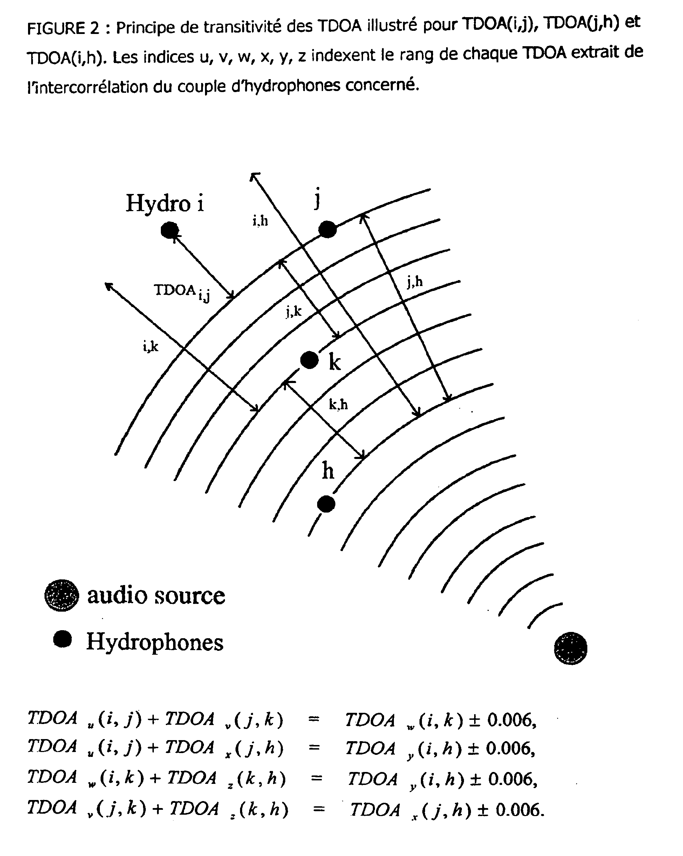

Il est par conséquent nécessaire de prévoir une étape 17 consistant à déterminer parmi les TDOA disponibles en 16, ceux qui sont cohérents entre eux, c'est-à-dire ceux qui respectent le principe de la transitivité des TDOA, qui sera rappelé plus en détail en liaison avec la figure 2. Toutes les étapes précédentes sont effectuées sur des fenêtres de 10s avec un recouvrement des fenêtres de p% (p pouvant aller de 0% à 95%, dans les exemples présentés p=50%).

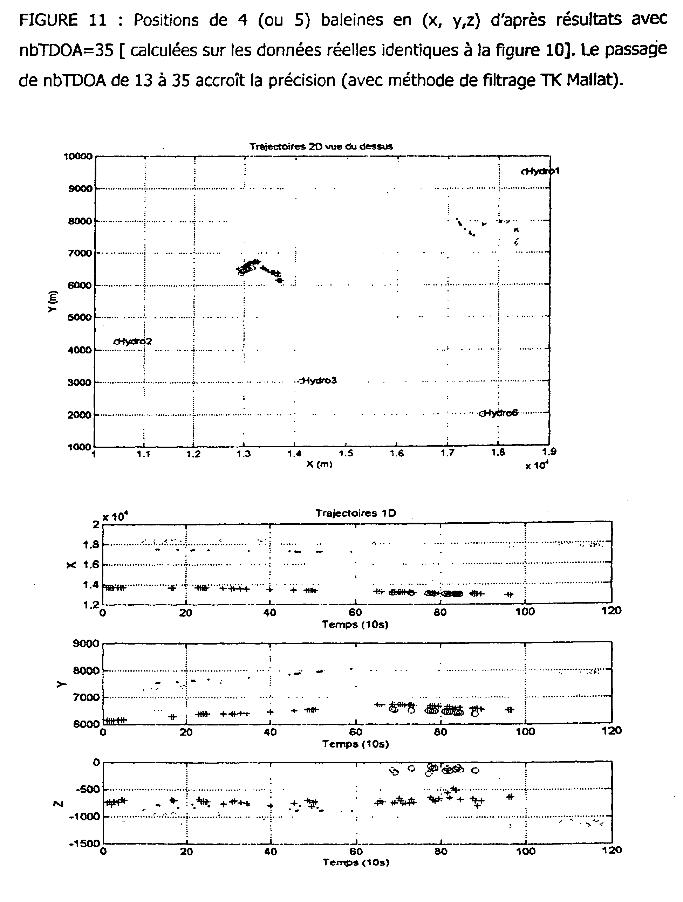

En sortie 18 de l'étape 17, on dispose d'un ensemble de TDOA cohérents entre eux, qui sont soumis à une étape de régression non linéaire permettant de déterminer en 19 les positions instantanées (x,y,z) de chaque baleine en fonction du temps. Ces positions brutes sont disponibles en 20 à la fin du procédé de traitement selon L'invention. Comme on le verra par la suite en relation avec la figure 11, l'obtention des positions spatiales des baleines sur les trois axes x,y,z pour certaines fenêtres de temps, rend possible l'application à ces positions de phases de traitement supplémentaires comme le lissage des trajectoires en vue de mieux visualiser en temps réel les trajectoires des baleines présentes dans la zone d'observation.

On se réfère à la figure 2 illustrant le principe de transitivité des TDOA. On a représenté dans cette figure une source S émettant un signal sonore. Dans l'exemple choisi pour décrire l'invention, cette source sonore S est un mammifère marin et le signal sonore est un clic. On a également représenté quatre hydrophones i,j,k,h. On note respectivement $T_i$, $T_j$, $T_k$, $T_h$, le temps de propagation du clic pour atteindre chacun des hydrophones i,j,k,h. Par ailleurs, on note par TDOA(i,j), la différence de temps de propagation $(T_j - T_i)$ du signal sonore pour atteindre les hydrophones i et j.

Le signal sonore produisant des ondes sphériques, le TDOA doit vérifier une relation de transitivité. Ainsi, sur la figure 2, pour un signal émis par la source S et atteignant les hydrophones i, j et k, on doit avoir la relation:

$$(1): \quad TDOA(i,j) + TDOA(j,k) = TDOA(i,k)$$

On voit qu'avec un réseau de quatre hydrophones i,j,k,h captant le clic d'une même source, il y a $C_4^2 = 6$ TDOA possibles. On peut choisir parmis ces 6 TDOA, trois TDOA indépendants. Les autres sont des combinaisons linéaires de ces derniers (voir équations (1), et figure 2).

L'invention utilise la transitivité des TDOA pour :

- sélectionner les sextuplets de TDOA vérifiant les 4 équations (1) pour vérifier qu'ils proviennent bien d'une même source ;
- ne conserver que 3 TDOA indépendants sur les 6 sélectionnés afin de localiser la source.

Filtrage du signal

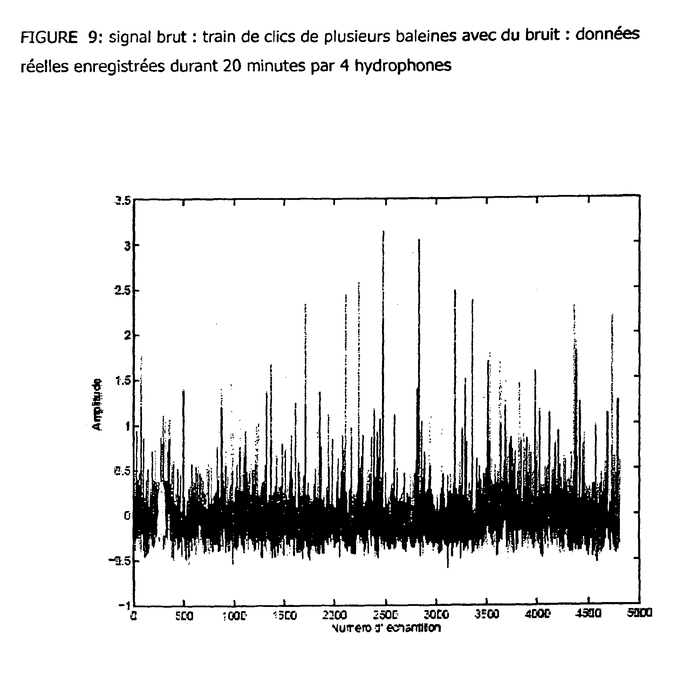

On se réfère à la figure 9, qui représente un signal brut avant filtrage, comportant plusieurs pics correspondant à des clics de plusieurs baleines. Il est donc clair qu'un signal brut de cette nature est très difficile à interpréter, et on ne sait pas, notamment, si les différents pics correspondent à des clics d'une même baleine.

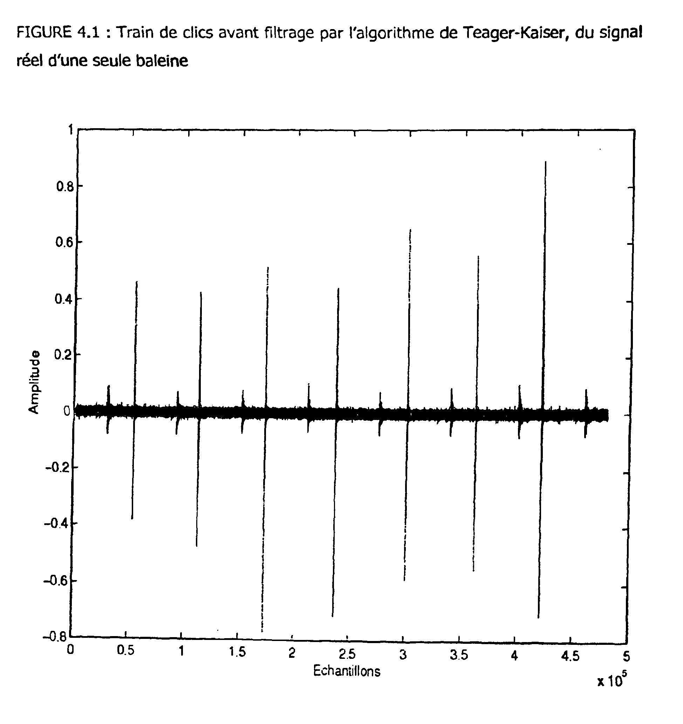

Alors qu'en présence d'une seule baleine (figure 4.1), on obtient des pics clairs et faciles à identifier, en présence de plusieurs baleines, les clics des baleines les plus éloignées et les moins directives vont générer des pics de faibles amplitudes qui vont se confondre avec le bruit. Pour conserver les clics des baleines les plus éloignées des hydrophones, il faut par conséquent éliminer le bruit, ce qui justifie un filtrage supplémentaire. Le procédé original permettant ce traitement fait partie de la présente invention.

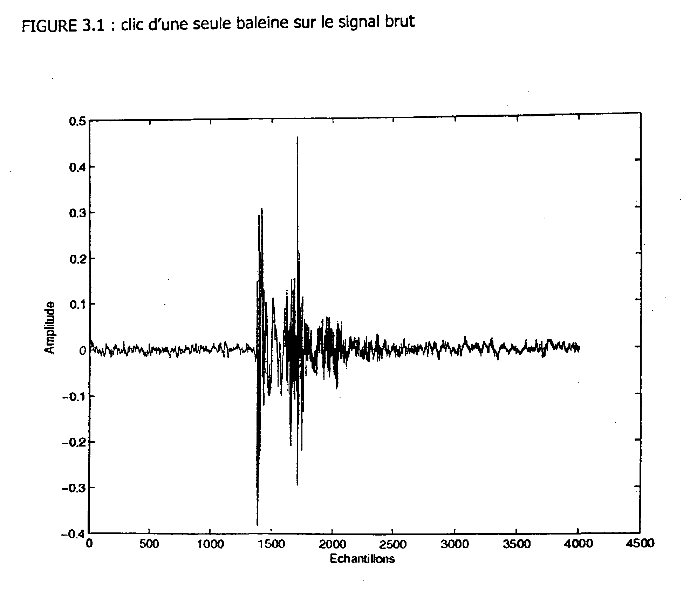

Comme indiqué plus haut, les signaux qui vont permettre de trajectographier les cétacés sont appelés des *clics.* La figure 3.1 montre le détail d'un clic échantillonné à 48 kHz. Les clics sont des signaux de hautes fréquences et de forts niveaux (jusqu'à 200 dB re: 1 $\mu$ Pa) que les cétacés émettent pour l'écho-localisation et la communication. Ils sont en général émis par trains comme sur la figure 4.1.

Comme on le voit sur la figure 3.1, l'amplitude d'un clic brut en fonction du temps montre que la structure de ce signal fait apparaître plusieurs pics : il s'agit d'un signal haute fréquence assez complexe, qui superpose un bruit HF et un signal HF. Ces signaux, lors des enregistrements sur hydrophones, possèdent un bruit de fond additif qui résulte de différents bruits (état de la mer (SSL Gaussien), signaux biologiques, bateaux et turbulences moléculaires), ce qui empêche de traiter les données brutes sans passer par une étape de filtrage. Mais il n'est pas possible de filtrer un clic de manière simple pour extraire le signal à l'aide d'un filtre basique tel un filtre passe-bas ou passe-haut, car un filtre de ce type réduirait aussi bien le signal que le bruit.

Pour résoudre cette difficulté, on procède selon l'invention à une étape de pré-filtrage consistant à appliquer l'opérateur d'énergie de Teager-Kaiser au signal brut.

L'opérateur de Teager-Kaiser en continu est défini ainsi:

$$\Psi[x(t)] = (\frac{dx(t)}{dt})^2 - x(t)\frac{d^2x(t)}{dt^2} = \dot{x}^2 - x\ddot{x}, \quad (2)$$

où $x(t)$ est la valeur du signal à l'instant t.

En discret, cela donne:

$$\Psi[x(n)] = x^2(n) - x(n+1)x(n-1), \quad (3)$$

où $x(n)$ est le n-ième échantillon.

Un des avantages de cet opérateur est que, à chaque instant, seulement 3 échantillons sont nécessaires à l'évaluation de l'énergie. C'est un filtre haute fréquence donc le résultat filtré sera de haute fréquence.

En considérant le signal enregistré sur les hydrophones comme:

$$s(n) = x(n) + y(n) + u(n). \quad (4)$$

où $s(n)$ est le signal enregistré, $x(n)$ le signal d'intérêt, $y(n)$ un signal d'interférence, $u(n)$ un bruit de fond de l'océan en faisant l'hypothèse qu'il est gaussien stationnaire au sens large sur une courte durée, en appliquant l'opérateur de TK à $s(n)$, on a:

$$\Psi[s(n)] = \Psi[x(n)] + \Psi[y(n)] + \Psi[u(n)] + T[n], \quad (5)$$

où $T[n]$ est la somme de tous les termes entre les paires possibles des composantes $(x(n), y(n)$ et $u(n))$. Par exemple, le terme $\Psi$, entre $x(n)$ et $y(n)$ est défini par:

$$\Psi_c[x(n), y(n)] = x(n)y(n) - x(n+1)y(n-1) \quad (6)$$

En prenant en compte le caractère passe-haut et le comportement statistique de l'opérateur, on montre que le résultat de l'équation (6) est approximativement donné par :

$$\Psi[s(n)] \approx \Psi[x(n)] + w(n). \quad (7)$$

où $w(n)$ est un processus gaussien. La sortie est alors dominée par l'énergie des clics tout en ayant un bruit additif gaussien.

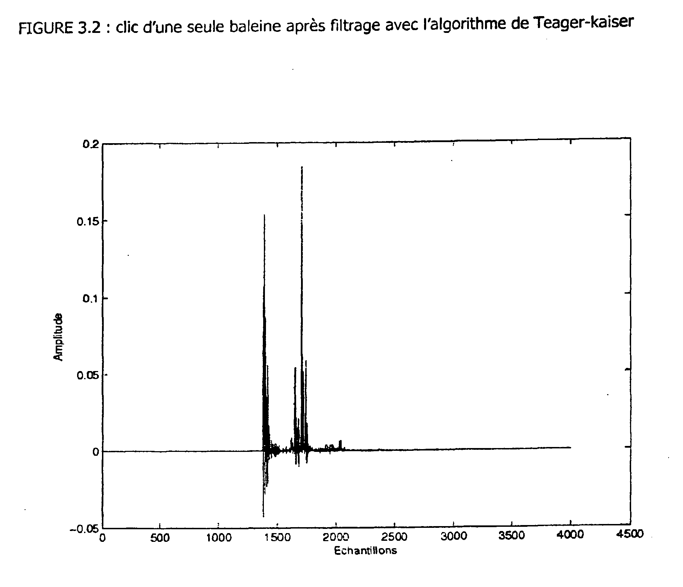

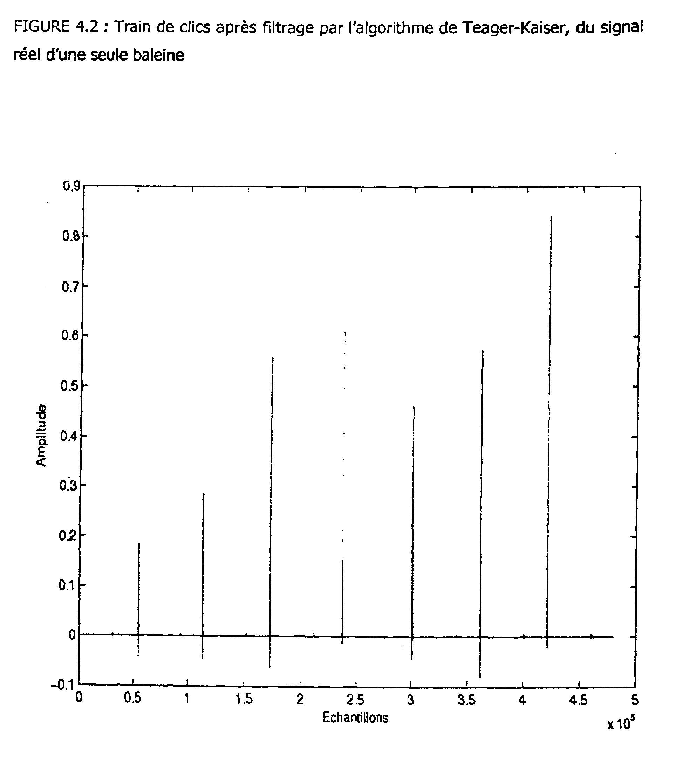

l'opérateur de Teager-Kaiser est appliqué sur chaque fenêtre de 10s de chaque hydrophone. La figure 3.2 montre le résultat lorsque l'opérateur est appliqué sur un clic et la figure 4.2 montre le résultat sur un signal brut tel que celui de la figure 4.1.

Par ailleurs le bruit de fond a été rendu gaussien grâce à l'opérateur de Teager-Kaiser.

Selon l'invention, l'étape de filtrage suivante consiste à effectuer une étape de décimation en prenant la moyenne du signal sur plusieurs fenêtres.

L'échantillonnage pouvant être de plusieurs dizaines de kHz et la durée d'un clic étant approximativement de 20ms, on procède donc d'abord à une décimation d'un facteur N en moyennant les N échantillons adjacents afin d'obtenir une représentation simple du clic. Cette décimation aura pour effet de réduire la précision temporelle des pics à N/Fe où Fe est la fréquence d'échantillonnage et de réduire la variance du bruit d'un facteur N.

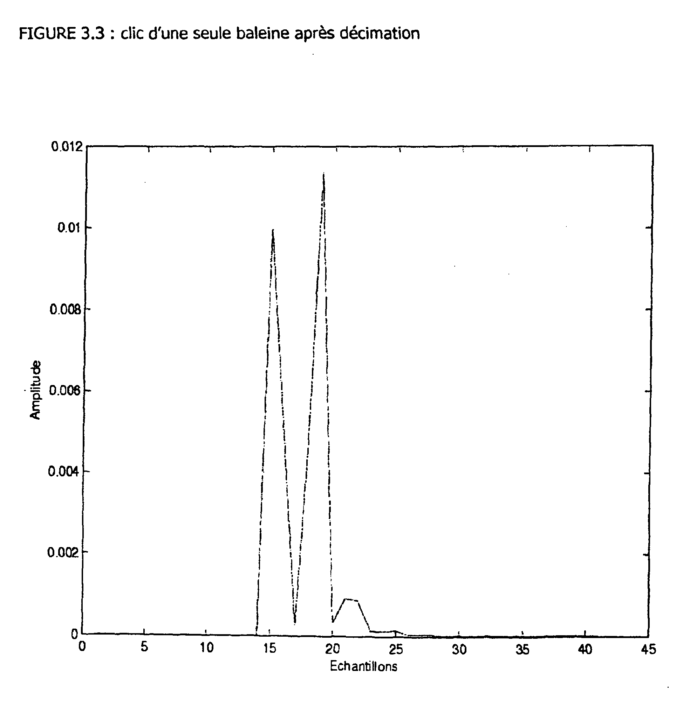

La figure 3.3 montre le détail d'un clic décimé d'un facteur 100 (fréquence d'échantillonnage du signal brut = 48KHz). On obtient une représentation simple du clic, de sorte que d'un point de vue temporel il ressemble à un pic. Cette décimation permet aussi de réduire la taille des données puisque le filtrage ultérieur doit prendre en compte moins de données, ce qui contribue à réduire significativement le temps de calcul par rapport aux autres techniques.

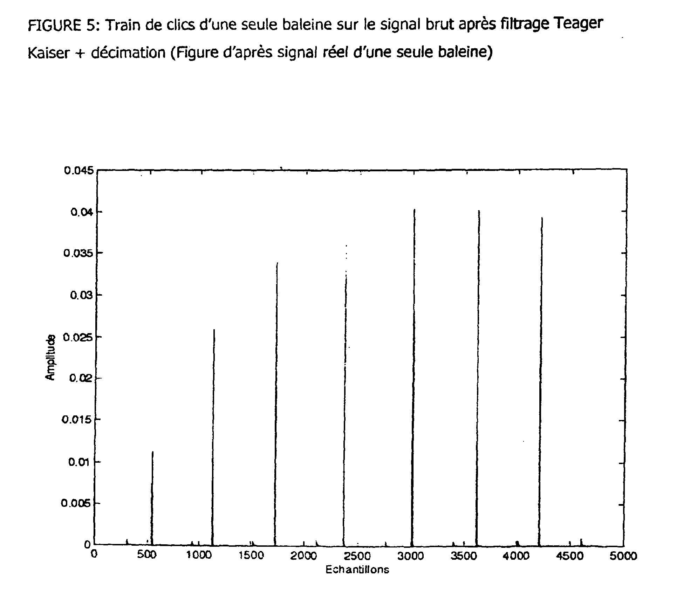

La figure 5 montre le résultat de la décimation sur cette fenêtre de 10s sur un train de clics comme celui de la figure 4.1. Les échantillons sont moins nombreux et les clics sont clairement identifiés par des pics, et par conséquent un filtrage supplémentaire n'est pas forcément nécessaire dans le cas d'une seule baleine, la composante bruit étant réduite.

Algorithme de Mallat :

Pour supprimer le bruit résiduel, l'invention prévoit d'utiliser l'algorithme de Mallat. En effet, on sait que ce dernier permet de débruiter les signaux possédant un bruit additif gaussien. Le but ici est de filtrer le signal pour supprimer le bruit gaussien tout en conservant l'information, c'est-à-dire les clics.

Rappelons d'abord le principe de l'algorithme. L'algorithme de Mallat décrit une transformation en ondelettes discrètes en utilisant l'analyse multi-résolution. Cela consiste à décomposer le signal suivant un plan haute fréquence et un plan de basse fréquence. Cette décomposition se fait grâce à deux filtres $g$ et $h$ qui forment une base dite de Haar:

$$h = \frac{\begin{bmatrix} 1 & 1 \end{bmatrix}}{\sqrt{2}} \; etg \; = \frac{\begin{bmatrix} 1 & -1 \end{bmatrix}}{\sqrt{2}}, \quad (8)$$

Le filtre $h$ est un filtre passe-bas, et $g$ un filtre passe-haut ayant tous deux la même fréquence de coupure. Ce sont des filtres miroirs conjugués. Ils permettent de calculer la décomposition d'un signal dans une base orthonormée d'ondelettes. Le signal à analyser y est représenté par un ensemble de détails $d$, et une approximation qui correspond à la dernière résolution, cela est appelé la représentation en ondelettes du signal. Il a été montré que les coefficients d'ondelettes de fortes amplitudes présentaient un rapport signal sur bruit favorable et inversement. On utilise cette propriété pour éliminer le bruit dans notre signal décomposé. Après avoir appliqué l'algorithme de Mallat à notre signal en sortie de l'opérateur de Teager-Kaiser sur des fenêtres de 10s (N=4800), on génère et décompose de la même façon un bruit $b$ gaussien, réduit et centré de même taille. On calcule la variance $\sigma_{B,n}$ des coefficients $B_{i,n}$ du plan de détail $n$ du bruit $b$ précédent, et on applique un seuillage dit universel sur chaque coefficient $C_{i,n}$ de chaque plan de détail $n$ du signal avec

$$C_{i,n} = \begin{cases} C_{i,n} & si \left| C_{i,n} \right| > thres * \sigma_{R,n} * \sigma_N, \\ 0 & sinon . \end{cases} \quad (9)$$

où *thres* est le coefficient de seuillage et $\sigma_N$ la variance du bruit dans le signal de 10s. pour estimer $\sigma_N$, on calcule les variances du signal brut (c'est-à-dire le signal d'intérêt plus le bruit), de préférence sur des fenêtres de 100 échantillons se chevauchant à 80%.

$\sigma_N$ est considérée comme le maximum de vraisemblance des variances précédemment calculées. Le maximum de vraisemblance est une méthode qui consiste à prendre l'estimation de variance la plus probable parmi les différentes variances calculées. Pour cela on prend la moyenne des variances qui sont le plus apparues. Ceci permet de s'affranchir de sélectionner à la main une portion du signal sans signal d'intérêt. En effet, le bruit est différent sur chaque hydrophone et il évolue au cours du temps, il serait trop fastidieux de faire une sélection manuelle. La variance d'un clic étant grande, et étant donnée la taille des fenêtres d'estimation de la variance, la durée d'un clic, et le nombre de clics par fenêtre (1 clic par seconde en moyenne pour une baleine), le maximum de vraisemblance des variances calculées a la plus grande probabilité d'être $\sigma_N$.

Dans la littérature, de nombreuses variantes du coefficient *thres* sont proposées selon le type de données que l'on traite. Ici on utilise le seuillage dit universel (ce qui rend complètement base indépendant notre procédé), qui consiste à utiliser :

$$thres = \sqrt{2 \cdot \log e(N)}. \quad (10)$$

où N est le nombre de coefficients d'ondelettes dans le plan seuillé.

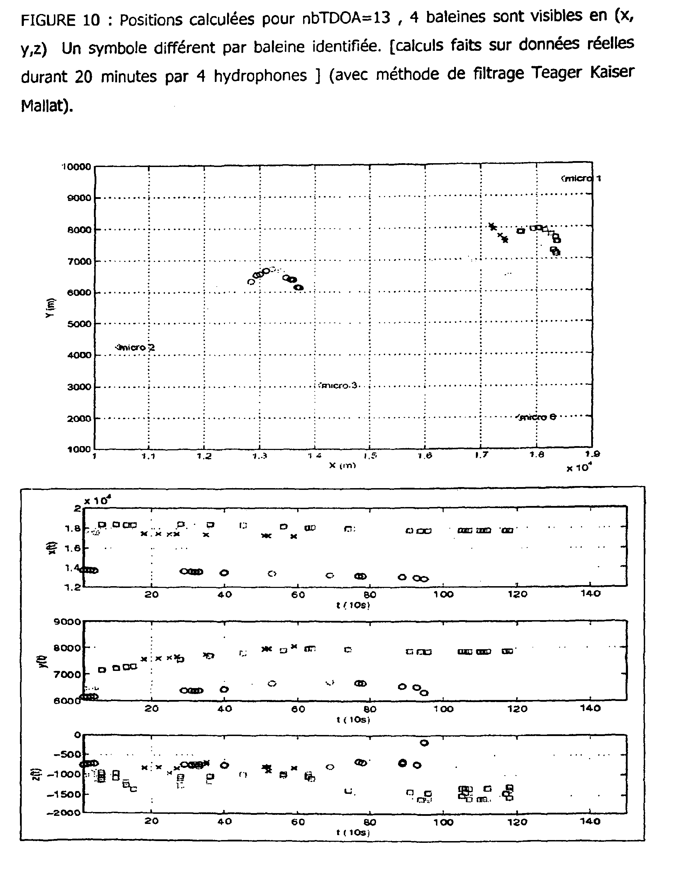

Enfin, après avoir effectué l'étape de seuillage, le signal débruité est reconstruit. L'algorithme de Mallat permet la performance intéressante dans le cas de plusieurs baleines, de garder les pics secondaires, c'est-à-dire ceux très proches du bruit, tout en éliminant ce dernier. Ensuite, on prend la racine carrée du signal à la sortie de l'algorithme de Mallat, on vérifie la transitivité des TDOA pour obtenir des triplets cohérents et on fait une régression non linéaire. On obtient ainsi plusieurs points de position x,y,z (t) pour chaque baleine, tel que représenté sur la figure 10.

En alternative par rapport à une étape de filtrage 13 utilisant les algorithmes de Teager Kaiser et Mallat, une variante de l'invention prévoit un filtrage adapté stochastique, noté par la suite filtrage FAS.

Le filtrage adapté stochastique (FAS) est une méthode de filtrage que l'on utilise ici pour faire de la détection de clics.

On considère un clic comme étant un signal aléatoire gaussien, de même que le bruit de mer.

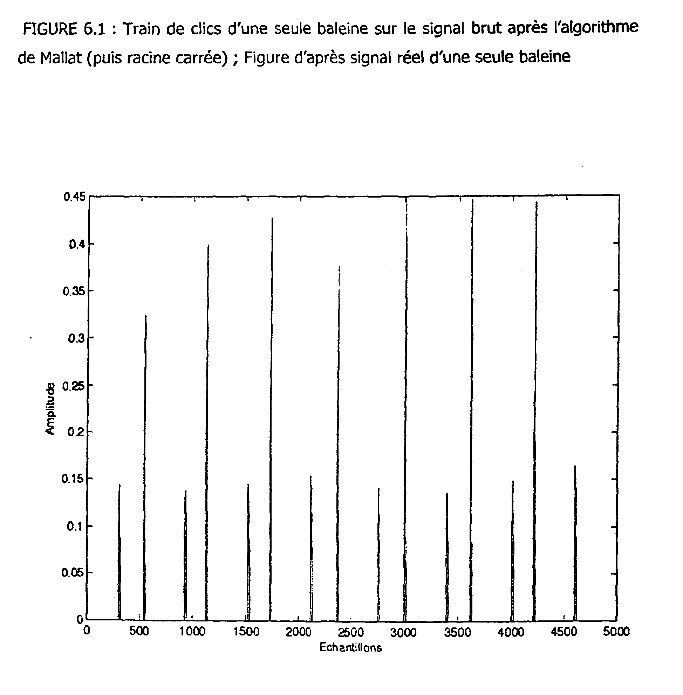

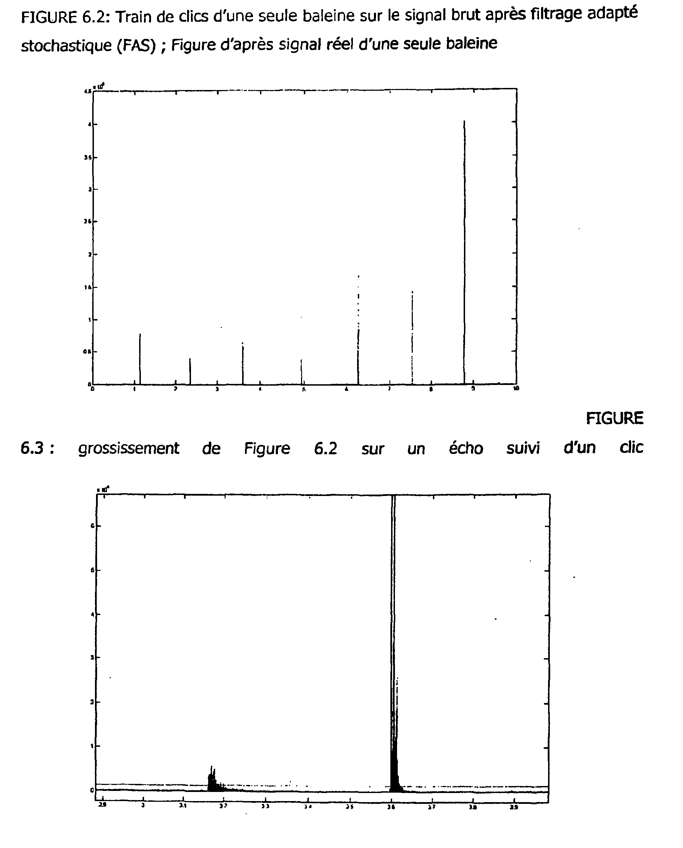

Soit A la matrice de variance-covariance d'un clic et B celle du bruit de mer. Les vecteurs du FAS sont alors les vecteurs propres de la matrice $B^{-1}A$. Le filtrage consiste à sélectionner le vecteur propre correspondant à la plus grande valeur propre de la matrice $B^{-1}$ A et à multiplier ce vecteur propre par le signal, sur des fenêtres de temps glissantes. On obtient ainsi un signal filtré par la méthode FAS. Le signal filtré est appelé une fonctionnelle, dont un exemple est représenté en figure 6.2, qui est le résultat du filtrage FAS appliqué au train de clics de la figure 4.1. Pour distinguer les clics dans le signal filtré, il faut choisir un seuil de détection. Toutes les valeurs au dessus de ce seuil sont considérées comme correspondant à la présence d'un clic.

Les seuils de détection sont évalués grâce à la variance du bruit et les courbes COR (Caractéristique Opérationnelle de Réception) du détecteur afin d'avoir un taux de fausse alarme de par exemple 1%.

Calcul des TDOA, selon l'étape 15 de la figure 1 :

Une bonne estimation des TDOA nécessite d'abord un bon filtrage, et c'est la raison pour laquelle l'invention prévoit d'utiliser un filtrage du type opérateur de Teager-Kaiser suivi de l'algorithme de Mallat, ou un filtrage adapté stochastique, comme décrit plus haut. Ce bon filtrage engendrera des pics de TDOA plus nets sur les intercorrélogrammes, ce qui combiné à la récupération d'un grand nombre de TDOA, permettra des estimations de trajectoires multiples, ce que ne permettent pas les procédés de l'état de l'art.

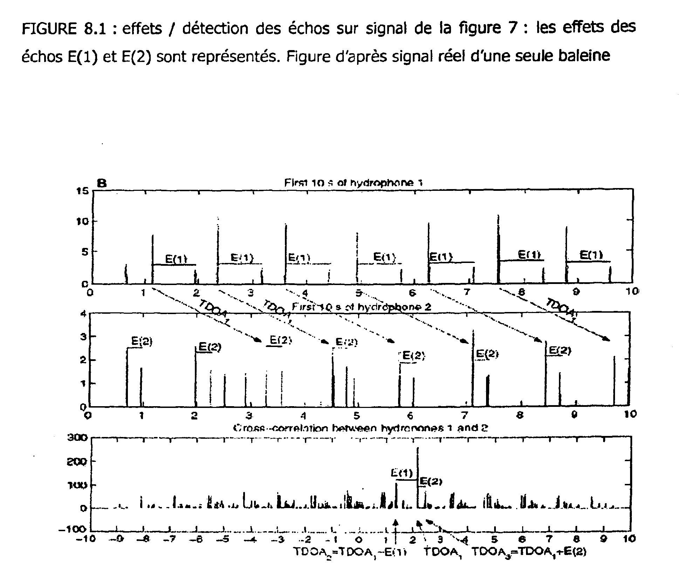

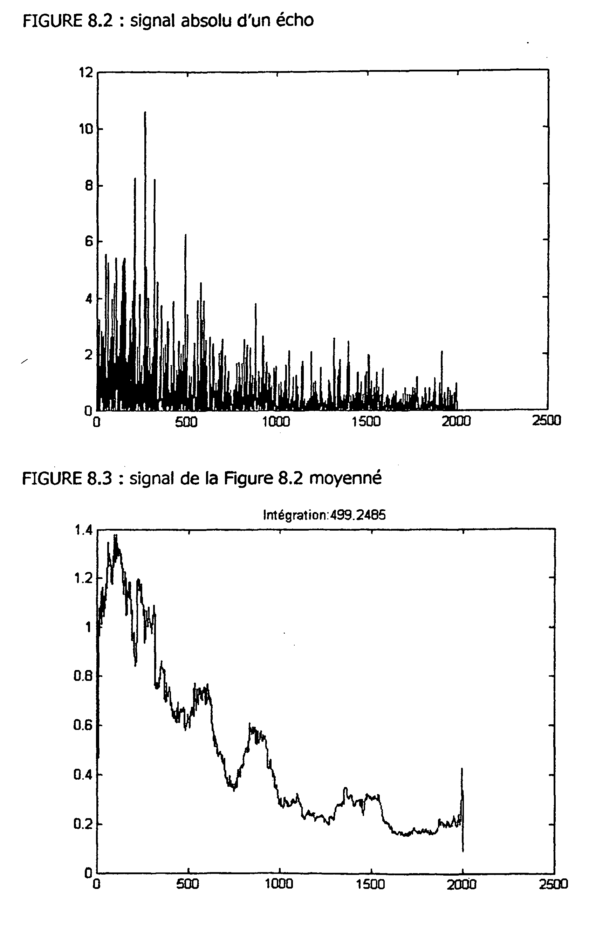

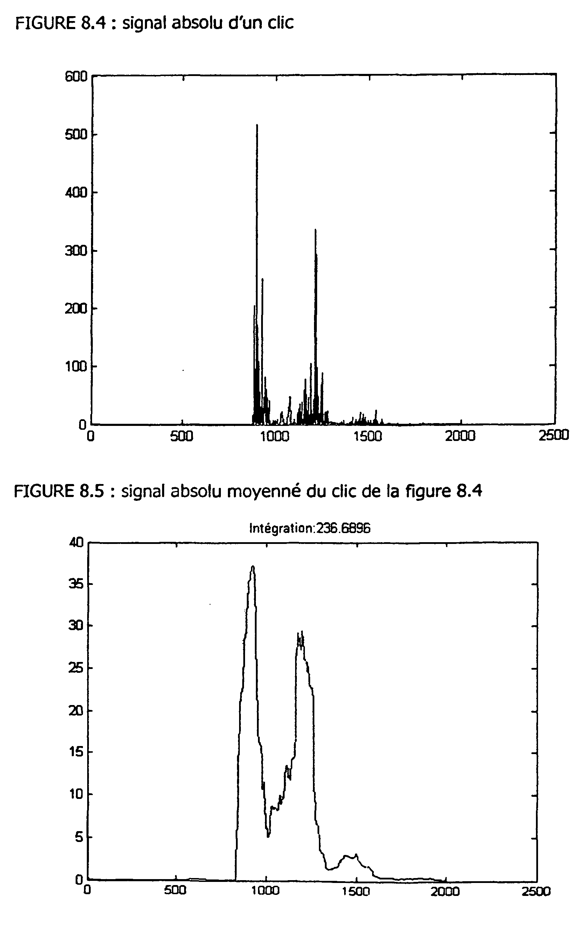

On se réfère à la figure 8. Les signaux des différents hydrophones sont inter-corrélés sur des fenêtres de 10 secondes pour estimer les différences de temps d'arrivée aux hydrophones (Time Delay Of Arrival, soit TDOA).

En figure 8, on a représenté l'exemple des signaux après filtrage par Teager-Kaiser et Mallat, pour les hydrophones 1 et 2. On voit donc les signaux de sortie de filtrage dans le cas d'une baleine, détectée par 2 hydrophones, à savoir les hydrophones 1 et 2.

L'algorithme de base pour déterminer les TDOA qui correspondent potentiellement à des clics est celui dit de Glotin-Giraudet: les TDOA sont calculés en intercorrélant les fenêtres de 10s de chaque couple d'hydrophones. Ils servent à la régression multiple non linéaire pour estimer les positions de la ou des trajectoires.

En théorie la position en abscisse du pic le plus élevé correspond au TDOA du clic d'une baleine, soit le $TDOA_1$ dans la figure 8. Il n'y a qu'un TDOA réel par couple d'hydrophones et par baleine. En cas de présence de clics de plusieurs baleines, on a autant de TDOA réels que de baleines. Mais afin de s'assurer d'avoir parmi les différents pics, celui qui correspond aux clics d'une baleine, on relève de préférence plusieurs TDOA.

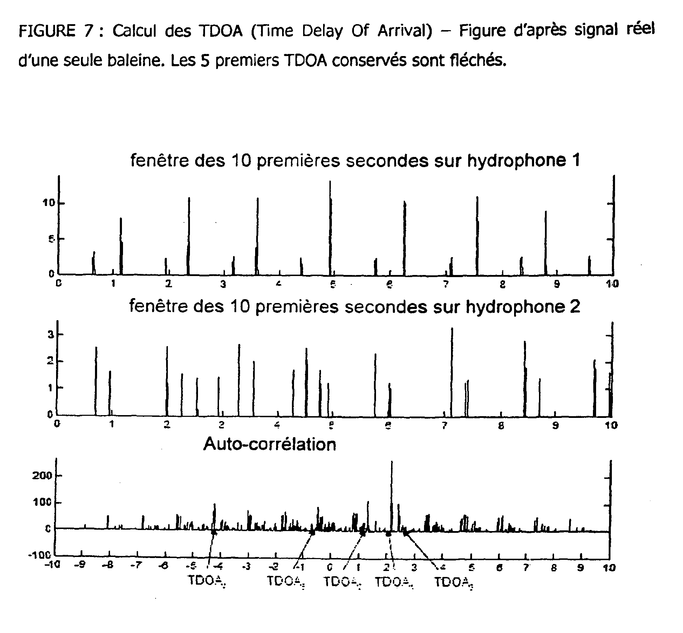

Dans la figure 7 nous montrons 5 TDOA, mais le procédé dans ce brevet permet de conserver jusqu'à 15 TDOA par fenêtre d'analyse, tout en restant temps réel, voire jusqu'à 35 TDOA si la puissance de calcul disponible le permet.

Ainsi, n (5 =< nbTDOA =< 35) $TDOA (i, j) = Tj - Ti$ des hydrophones ($i, j$) sont calculés en conservant la valeur du temps correspondant aux nbTDOA valeurs les plus élevées dans l'inter-corrélogramme et ce pour chaque couple d'hydrophones. La précision de chaque TDOA est relative à l'opération éventuelle de décimation (dans notre exemple elle est de $\pm$ 2 $ms$).

Comme représenté au bas de la figure 7, l'intercorrélogramme des deux signaux donne des pics, dont on garde une quantité correspondant à nbTDOA. Dans le cas à une baleine, on peut ainsi récupérer le vrai TDOA étant donnée la bonne qualité des données. Pour chaque pic, on regarde la valeur en abscisse, qui est la différence de temps entre deux hydrophones, sachant qu'elle peut être positive ou négative en fonction de l'hydrophone pris pour référence.

Pour bien détecter plusieurs baleines, ce qui est un aspect important du procédé, il faut relever un maximum de TDOA potentiels, c'est-à-dire les maximums des fenêtres des intercorrelogrammes de chaque couple d'hydrophone. Un bon compromis de valeur pour nbTDAO entre temps de calcul et contenu informatif des TDAO peut être pris à nbTDOA=15. En-deçà de ce nombre, le risque de perdre des TDOA réels existe, et au-dessus de ce nombre, le temps de calcul dû à l'étape 17 de détermination des TDOA cohérents décrite par la suite devient problématique pour assurer un calcul en temps réel avec un simple ordinateur personnel.

Notons que l'on ne distingue à priori pas le cas à une ou plusieurs baleines (le nombre étant inconnu au départ). Par défaut donc et si le PC convient, on prend nbTDOA=15.

On a donc en sortie 16 de la figure 1, un nombre nbTDOA de temps qui sont des TDOA potentiels, auxquels on va appliquer une étape 17 de détermination, parmi tous ces TDOAs potentiels, de ceux qui sont cohérents entre eux, comme cela sera décrit plus bas.

Mais avant la détermination des TDOAs cohérents, l'invention prévoit à titre optionnel une étape de détection et de suppression des échos, consistant à éliminer les TDOA générés pas les échos dus aux réflexions à la surface et au fond de la mer.

Suppression des TDOA dus aux échos selon l'étape 21 de la figure 1 :

On se réfère à la figure 8. Selon une première méthode de suppression des échos, on procède par autocorrélation des signaux de plusieurs hydrophones.

On a pour chaque pic un écho (dans le cas d'une baleine et lorsque le signal est propre), et la différence de temps entre le pic et l'écho est notée E(i), où i est le ième hydrophone. On voit en haut de la figure 8 l'écho E1 par rapport à l'hydrophone 1 et en bas l'écho E2 par rapport à l'hydrophone 2.

On fait alors une auto corrélation de chaque signal d'hydrophone. On prend le lobe secondaire le plus élevé, et s'il atteint une certaine proportion ($1/5^{ème}$) par rapport au pic principal qui correspond à l'énergie, la valeur en abscisse du pic secondaire est la valeur $E(i)$ de l'écho pour l'hydrophone i. Dans le cas contraire, on considère qu'il n'y a pas d'écho. Ainsi, connaissant les échos $E(i)$, on peut identifier les TDOA générés par les échos, afin d'éliminer ces TDOA.

Les $TDOA_x$ vérifiant une des relations (11) suivantes par rapport au $TDOA_1$ sont donc éliminés comme étant dûs à des échos :

$$TDOA_x(i,j) - TDOA_1(i,j) \;=\; k * E(i) \pm 0.002, k = \{1,2\}, x \in \{2..nbTDOA\}$$
$$TDOA_x(i,j) - TDOA_1(i,j) \;=\; -k * E(j) \pm 0.002, k = \{1,2\}, x \in \{2..nbTDOA\} \qquad (11)$$

Selon une méthode alternative, on peut procéder à l'élimination des échos en utilisant l'une des propriétés des échos, qui est le fait qu'ils sont allongés dans le temps (voir par exemple l'écho représenté en figure 8.2 qui s'étend sur 2000 échantillons du signal), du fait des différentes couches d'eau que traverse le signal réfléchi, ce qui retarde certaines fréquences. Comme on le voit en comparant les figures 8.2 et 8.4, les signaux de clic et d'écho ont un profil bien différent, en durée et en nombre d'échantillons.

Pour cela, une portion de signal de 30ms est sélectionnée autour de chaque date de détection, ce qui correspond potentiellement à un clic ou un écho.

Comme la valeur absolue du signal d'écho varie très vite, pour détecter et éliminer les échos, on procède de la manière suivante :

- on détermine l'enveloppe du signal. A cet effet, on prend la valeur absolue du signal (filtré à l'aide d'une des méthodes de filtrage décrites précédemment) et cette valeur absolue est ensuite moyennée et normalisée sur des fenêtres de par exemple 100 échantillons (pour du 48kHz) ce qui met en évidence une enveloppe du signal, tel que cela est illustré en figure 8.3 pour un écho, et en figure 8.5 pour un clic. On voit d'ailleurs que la forme de l'enveloppe d'un clic est très différente de celle d'un écho.

- ensuite on intègre cette enveloppe (ce qui revient à calculer l'aire disposée sous l'enveloppe de la figure 8.3 ou de la figure 8.5), et le résultat (en l'occurrence une aire de 499.2485 pour l'écho et une aire inférieure de 236.6896 pour le clic) est comparé à un seuil prédéterminé de façon expérimentale.

- compte tenu de l'allongement temporel des échos par rapport aux clics, l'aire de l'enveloppe correspondant à un écho sera bien supérieure à l'aire d'un signal correspondant à un clic. Par conséquent, l'homme du métier pourra aisément déterminer expérimentalement un seuil tel que l'enveloppe des signaux au dessus de ce seuil correspondent à des échos (et les signaux correspondants sont éliminés), tandis que l'enveloppe des signaux en dessous de ce seuil correspondent à des clics, et les signaux correspondants sont conservés.

D'autres méthodes d'élimination des échos peuvent encore être mises en oeuvre dans le cadre de l'invention. Ainsi, on peut effectuer une décomposition du signal par ondelettes, en utilisant notamment l'algorithme dit de « matching pursuit » de Mallat, qui est disponible dans un produit appelé « Matching Pursuit Toolkit ».

On pourrait aussi effectuer une recherche de signature des clics, dite « signature matching » en terminologie anglo-saxonne, consistant à rechercher par exemple des corrélations maximum avec des signaux connus de clics.

Ces deux méthodes peuvent être mises en oeuvre en temps réel dans une boîte à outil appelée MPTK-IRISA.

En définitive, les méthodes de suppression d'écho font qu'il est donc possible de ne conserver que les clics dans le signal, avec une complète élimination du bruit.

Donc en principe après le calcul et la suppression des échos, on a éliminé les TDOA générés par ces échos, et en conséquence, parmi les TDOA restants figurent les vrais TDOA correspondant aux clics des baleines.

Détermination des TDOA cohérents, selon l'étape 17 de la figure 1 :

Le principe consiste à rechercher les TDOA qui proviennent d'une même source, ce qui consiste à vérifier la transitivité des TDOA. On a 4 hydrophones i, j, k, h . Donc on a pour un TDOA (i,j) donné, un maximum de nbTDOA = 15 valeurs ( ou moins en fonction des éliminations qui ont pu être faites lors du calcul d'écho ci-dessus).

On ne conserve que les TDOA qui vérifient les 4 équations ci-dessous (12), et on numérote les TDOA qui proviennent de la même source, afin de ne pas mélanger les valeurs lors de la régression prévue plus loin.

Pour mettre en oeuvre le principe de cohérence, on recherche par conséquent sur chaque fenêtre de 10s, les sextuplets de TDOAs générés par la même source, c'est-à-dire vérifiant la cohérence de leur somme entre eux. Un quadruplet d'hydrophones (*i, j, k, h*) localise la même source avec les TDOA (*u, v, w, x, y, z*) si les quatre relations (12) suivantes sont vérifiées:

$$TDOA_u(i,j) + TDOA_v(j,k) = TDOA_w(i,k) \pm er,$$
$$TDOA_u(i,j) + TDOA_x(j,h) = TDOA_y(i,h) \pm er,$$
$$TDOA_w(i,k) + TDOA_z(k,h) = TDOA_y(i,h) \pm er, \quad (12)$$
$$TDOA_v(j,k) + TDOA_z(k,h) = TDOA_x(j,h) \pm er.$$

où er est égale à trois fois l'incertitude engendrée par la décimation du signal brut (dans notre exemple er = 3*0.002 = 0.006.)

Dans le procédé selon l'invention, il est en effet possible d'avoir nbTDOA allant jusqu'à 35 tout en conservant un traitement en temps réel sur un ordinateur de type PC. En effet en prenant le système entier (12) composé de 4 équations (de 1 à 4), chaque TDOA ayant nbTDOA valeurs possibles, il y a un nombre égal à nbTDOA^6 vérifications du système. Un aspect intéressant du procédé consiste à vérifier d'abord la première équation pour toutes les valeurs de TDOA qui la composent, ce qui fait un calcul en nbTDOA^3. Pour chacune des équations 2, 3, 4, leur vérification n'est faite que dans le cas où l'équation qui les précède est vérifiée. On réduit ainsi considérablement le temps de calcul qui répond alors à une complexité entre nbTDOA^3 et nbTDOA^6. On gagne alors un temps de calcul de plus d'un facteur 100 par rapport à une version d'analyse directe.

Les sextuplets de TDOA(u,v,w,x,y,z) ne répondant pas au système d'équations (12) sont éliminés, comme n'étant pas cohérents.

Pour quatre hydrophones, trois TDOA indépendants sont sélectionnés, relativement à un hydrophone. On obtient donc en sortie 18 de l'étape 17 de la figure 1, trois TDOA indépendants, qui sont ensuite utilisés dans l'étape 20 pour calculer la position de la source d'émission des clics, par minimisation de la fonction d'erreur des moindres carrés sur la position, comme expliqué ci-dessous.

Calcul de la position instantanée Xs(t) de la source des clics :

On effectue à cet effet une régression multiple non linéaire selon l'étape 19 de la figure 1, grâce à l'algorithme de Gauss-Newton, en utilisant par exemple une vitesse du son dans l'eau constante de 1500 $ms^{-1}$. La position de la source est notée X. Les trois TDOAs indépendants {$TDOA_u(i,j)$, $TDOA_w(i,k)$, $TDOA_y(i,h)$} de chaque quadruplet d'hydrophones (*i, j, k, h*) sont utilisés pour minimiser l'erreur LMS (Least Mean Square) dans le système des trois équations suivantes:

$$Q(X_s, X_i) - Q(X_s, X_j) = TDOA_u(i, j) * c,$$
$$Q(X_s, X_i) - Q(X_s, X_k) = TDOA_w(i, k) * c, \qquad (13)$$
$$Q(X_s, X_i) - Q(X_s, X_h) = TDOA_v(i, h) * c,$$

où $Q(X_s, X_a)$ est la distance euclidienne entre la source de coordonnées inconnues $X_s = \begin{bmatrix} x \\ y \\ y \end{bmatrix}_s$ et l'hydrophone de

coordonnées $X_a$ connues et $c = 1500ms^{-1}$.

Dans le détail, lors de la régression non linéaire, on minimise récursivement la fonction:

$$min_{X_s}(f(X_s)) = f_1(X_s)^2 + f_2(X_s)^2 + f_3(X_s)^2, \qquad (14)$$

où

$$f_1(X_s) = \sqrt{\sum_{l=1}^{3}(X_s(l) - X_i(l))^2} - \sqrt{\sum_{l=1}^{3}(X_s(l) - X_j(l))^2} + d_{i,j},$$

$$f_2(X_s) = \sqrt{\sum_{l=1}^{3}(X_s(l) - X_i(l))^2} - \sqrt{\sum_{l=1}^{3}(X_s(l) - X_k(l))^2} + d_{i,k},$$

$$f_3(X_s) = \sqrt{\sum_{l=1}^{3}(X_s(l) - X_i(l))^2} - \sqrt{\sum_{l=1}^{3}(X_s(l) - X_h(l))^2} + d_{i,h},$$

$$(15)$$

avec $d_{i,j} = TDOA_u(i, j) * c$ le TDOA estimé entre l'hydrophone $i$ et l'hydrophone $j$, et $x_a$ les coordonnées $\begin{bmatrix} x \\ y \\ z \end{bmatrix}_a$ de

l'hydrophone $a$. La fonction est de préférence minimisée avec la technique de Levenberg-Marquardt. Si la solution de (14) est $X_{estim\,c}$' alors l'erreur LMS s'écrit:

$$f(X_{estime'}) = f_1(X_{estime'})^2 + f_2(X_{estime'})^2 + f_3(X_{estime'})^2 \qquad (16)$$

Une position X de la source de clics est considérée comme correcte quand $f(X_{estim\,c'}) < 1$ dans notre exemple, ou à un certain seuil de façon générale, sinon elle n'est pas prise en compte.

Détermination et représentation des trajectoires des baleines :

On se réfère à la figure 10, qui montre les positions successives de quatre baleines sur les axes x,y,z, en fonction du temps, chaque baleine étant représentée par un symbole différent. Chaque résolution du système (13) de 3 équations donne une seule position Xs(x,y,z). Comme on a plusieurs jeux de triplets indépendants de TDOA cohérents, on résout ce système d'équations pour chaque jeu, ce qui donne plusieurs points sur la figure 10 pour chaque baleine et chaque instant considéré, aussi bien en vue de dessus qu'en vue sur chaque axe x,y,z en fonction du temps.

La figure 11 est équivalente à la figure 10 avec un nombre de TDOA plus élevé (35), et on observe que les trajectoires en x,y,z et aussi en vue de dessus dans le plan x,y, sont plus précises.

Une fois que des fenêtres de temps sont identifiées comme participant à la convergence d'une position Xs par régression, le procédé selon l'invention extrait ces fenêtres et les clics qui y sont contenus, et les étiquette en utilisant les valeurs de TDOA comme provenant de la source située en S. Les continuums spatio-temporels des positions permettent d'isoler des trajectoires individuelles et donc de lier des clics à une baleine en particulier (par clustering automatique du plus proche voisin par exemple). On sait d'après Laplanche et al. que la forme des clics identifie l'âge et le sexe des baleines, et peut servir à estimer l'activité de la baleine. L'extraction de clics dans du bruit ou plusieurs trains de clics de différentes baleines constitue donc un processus très intéressant que permet l'invention.

Lissage des trajectoires :

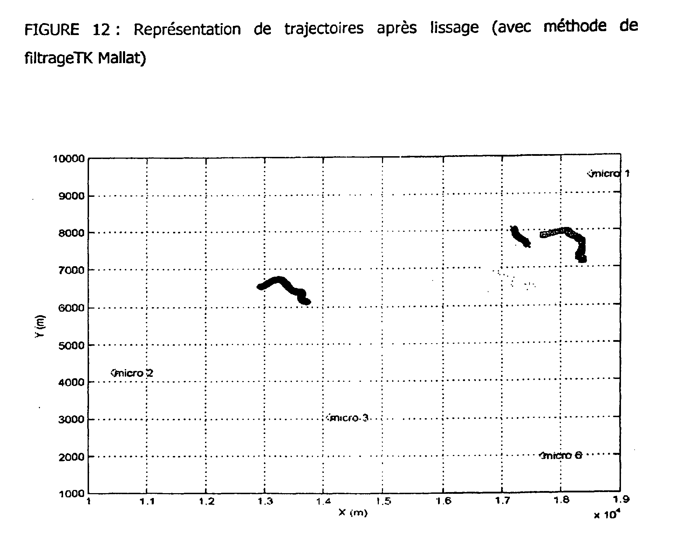

Au vu de ces résultats, une position est estimée, pour chaque individu, plusieurs fois par minute (une toutes les 10s dans le cas idéal). En conséquence, certaines zones ne possèdent pas de point et forment des espaces vides dans les trajectoires. On arrive alors aux limites du système qui ne peut pas estimer davantages de positions car il y a trop de recouvrement de clics sur certaines fenêtres de détection. On pourra remédier à ce problème en lissant les trajectoires comme représenté en figure 12, selon des méthodes de lissage connues en soi, par exemple une méthode d'interpolation linéaire.

Le lissage linéaire ou par splines des trajectoires permet d'estimer les positions inconnues de la baleine entre deux points de passage obtenus (figure 10). Cela permet de déterminer les TDOA qui auraient généré ces positions, car la position de la baleine et les coordonnées des hydrophones sont connues. On peut alors revenir sur l'enregistrement et étiqueter les clics sur des portions du signal dont le filtrage et les inter-corrélations n'ont pas réussi à extraire de l'information.

Estimation du profil de célérité :

L'invention telle que décrite jusque-là faisait l'hypothèse de l'utilisation de quatre hydrophones et d'un profil de célérité constant de 1500 m/s. Il est à noter qu'avec un hydrophone supplémentaire (soit 5 hydrophones au moins), il est possible, en ajoutant un degré de liberté aux équations (13), d'estimer un profil de célérité caractéristique du milieu au moment de l'enregistrement. On s'affranchit alors d'un profil de célérité modélisé pour la période concernée. Le 5ème hydrophone ajoute un degré de liberté au système et permet d'effectuer la régression pour estimer le vecteur de position de la source -célérité $\theta$ sur chaque fenêtre de 10s, avec :

$$\theta = \begin{bmatrix} x \\ y \\ z \\ c \end{bmatrix} \qquad (17)$$

On utilise alors le système suivant:

$$\begin{aligned}
Q(X_S, X_i) - Q(X_s, X_j) &= TDOA_v(i,j) * c, \\
Q(X_s, X_i) - Q(X_s, X_k) &= TDOA_w(i,k) * c, \\
Q(X_s, X_i) - Q(X_s, X_h) &= TDOA_y(i,h) * c, \\
Q(X_s, X_i) - Q(X_s, X_l) &= TDOA_v(i,l) * c,
\end{aligned} \qquad (18)$$

Où $Q(X_s, X_a)$ est la distance euclidienne entre la source $X_s = \begin{bmatrix} x \\ y \\ y \end{bmatrix}_s$ et l'hydrophone de coordonnées $X_a$,

$TDOA_u(i, j)$, $TDOA_w(i, k)$, $TDOA_y(i, h)$, $TDOA_v(i, l)$ les quatre TDOA indépendants et $c$ la norme de la célérité du son dans le milieu, qui sera dépendante du temps de l'enregistrement. Ensuite, on réinfecte $c(t)$ dans le système d'équations (13). La qualité des estimations spatiales est alors améliorée. Bien sûr, l'ajout d'hydrophones supplémentaires améliore la qualité des résultats, sans dramatiquement diminuer la vitesse d'éxécution.

Système pour mettre en oeuvre le procédé de trajectographie selon L'invention :

Afin de mettre en oeuvre le procédé selon l'invention, il suffit d'utiliser un ordinateur standard pourvu d'une carte d'acquisition par hydrophone, et capable d'exécuter un logiciel mettant en oeuvre les étapes de traitement décrites plus haut. En outre, il faut au minimum quatre hydrophones (échantillonnant à au moins 400 Hz dans le cas du cachalot), et espacés de quelques dizaines à quelques centaines de mètres. Ils peuvent être fixes et posés au fond de la mer ou sur une côte. Mais ils peuvent aussi être disposés sur des navires, ou dérivables en surface ou dans l'eau si un système de type GPS y est associé. Les enregistrements doivent être de plusieurs minutes pour prendre en compte le déplacement des cétacés et ainsi obtenir des trajectoires.

De préférence, le système de mise en oeuvre du procédé se compose d'un kit qui se largue en mer et qui comporte les N-1 hydrophones flottants distants de quelques dizaines de mètres, pourvus d'un système de localisation par GPS ou d'une petite balise émettrice (pour auto-localisation des hydrophones). Le Nième hydrophone (de même caractéristique) est immergé à quelques dizaines de mètres sous les autres. Ainsi les dérives des hydrophones peuvent être calculées par GPS ou émetteur sonore situé sur chaque hydrophone pour les relocaliser précisément toutes les minutes en fonction de la position d'un hydrophone de référence (sur la coque d'un bateau en panne par exemple). Les hydrophones sont reliés par câble ou par téléphone portable nouvelle génération au PC embarqué, et la trajectographie des baleines détectées est alors possible en temps réel.

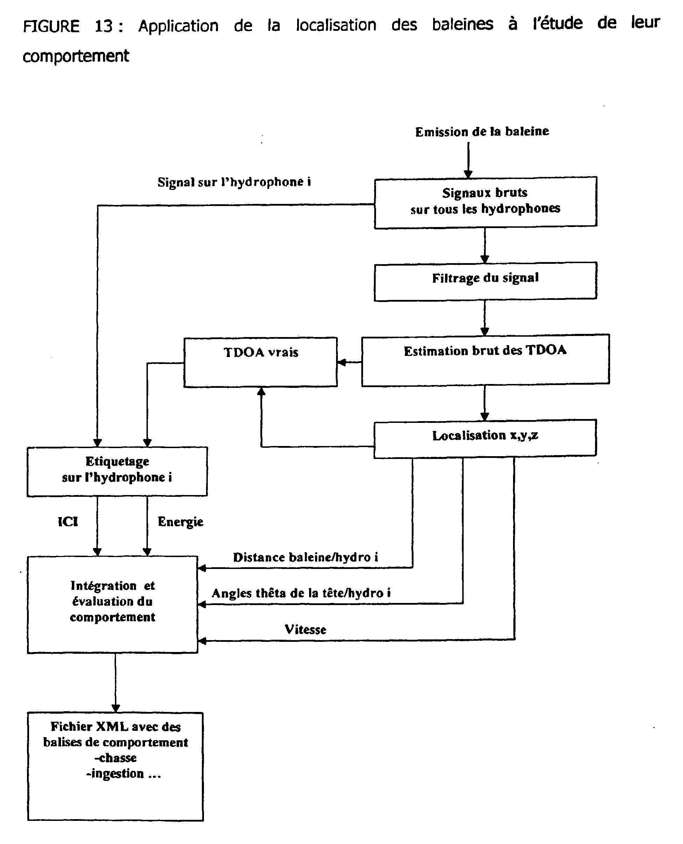

On se réfère à la figure 13 qui montre un organigramme d'un procédé permettant d'utiliser et d'exploiter les positions (localisation en x,y,z) obtenues (en 19) des baleines grâce au procédé de trajectographie, pour leur étude comportementale.

A partir des TDOAS et du signal sur chaque hydrophone, on peut procéder à l'étiquetage 23 du signal et déterminer son énergie et l'intervalle interclic (ICI). En outre, la localisation en 19 permet de déterminer la trajectoire, et par conséquent d'autres paramètres tels que l'évolution de la distance de la baleine, l'angle de sa tête, et la vitesse de la baleine par rapport à l'hydrophone i. Ces données combinées en 24 avec celles issues de l'étiquetage peuvent donc être intégrées, annotées, structurées à l'aide de fichiers de type XML, et finalement stockées automatiquement dans une base de données.

Enfin elles peuvent être analysées en 25, à la demande, afin de mieux comprendre le comportement des baleines dans différentes situations : chasse, ingestion de calmars, recherche de proie, etc.

Avantages de l'invention :

Le procédé de trajectographie selon l'invention répond aux buts fixés. Ainsi, l'invention permet d'observer par voie passive, sans aucune perturbation du milieu ou des baleines, un groupe de plusieurs baleines évoluant à plusieurs centaines de mètres sous la surface et dans une aire de plusieurs kilomètres carrés.

Grâce aux étapes de prétraitement et de filtrage du signal des hydrophones, l'invention fonctionne pour de faibles rapports signal/bruit (SNR) sans traitements fréquentiels complexes mais en filtrant et analysant un nombre maîtrisé de TDOA permettant des traitements en temps réel.

Le signal référencé par « clic » ou signal non-stationnaire dans tout le texte de cette demande de brevet peut être remplacé par tout autre signal quasi-stationnaire, voire harmonique, tant que l'on peut y détecter des évènements singuliers assez précis dans le temps, ces singularités permettant la datation d'évènements dans le signal, comme les instants de début d'harmoniques intermittents (« on set »). Bien entendu, si le signal se propage dans un milieu autre que l'eau de mer, il faudra remplacer les hydrophones décrits en relation avec l'exemple de la trajectographie de cétacés en milieu marin, par des capteurs adaptés au signal acoustique ou électromagnétique à capter.

Le procédé selon l'invention peut aisément être exécuté en temps réel à l'aide d'un logiciel fonctionnant sur un PC portable de type « Windows™ » / Matlab™ pourvu d'un microprocesseur de type « Pentium™ » et d'une mémoire vive de l'ordre de 1 Gigaoctet.

Il est intéressant de noter que le procédé selon (Invention permet de détecter et de trajectographier X sources avec Y capteurs, tout en ayant un nombre de capteurs Y inférieur à celui des X sources. (Ainsi, 4 =< Y, et X varie de 1 à une douzaine, mais Y n'est pas nécessairement supérieur ou égal à X). L'invention permet aussi l'étiquetage des émissions superposées de plusieurs sources, et dans le cas des cétacés l'analyse de leur comportement individuel et en groupe, les caractéristiques de leurs émissions liées à leur comportement de chasse par exemple (intervalle interclic notamment), et leur comptage alors qu'ils sont immergés durant de longues périodes.

L'invention permet en outre d'estimer la célérité moyenne d'un signal dans un milieu quelconque (liquide, solide ou gazeux, ou possédant plusieurs phases), en recourant éventuellement à l'émission artificielle de sources contrôlées.

Principales applications du procédé de trajectographie selon l'invention:

Les applications du procédé de trajectographie simultanée selon l'invention sont nombreuses, dans plusieurs domaines. On en citera quelques-unes, uniquement à titre d'exemple et sans aucun caractère limitatif.

Les propriétés et avantages de l'invention intéressent, en plus de certaines applications militaires, les éthologues qui ont très peu de données sur ces animaux qui passent l'essentiel de leur vie dans les très grandes profondeurs (en dessous de - 1000 mètres).

D'un point de vue écologique et éthologique, le procédé fournit les positions et les trajectoires en temps réel, ainsi que l'attribution des clics à leurs sources. Par conséquent, il permet indirectement le dénombrement de cétacés, et la détermination de leur sexe et de leur taille. On peut en déduire des cartes de migration et étudier les variations de comportement des cétacés, et les mettre en corrélation notamment avec les changements climatiques.

Le procédé selon l'invention définit un système complet permettant de recenser plusieurs informations décrivant l'activité des mammifères marins dans une zone maritime donnée de plusieurs km$^3$ (comme par exemple dans un sanctuaire comme "PELAGOS" de la Mer Ligure, au large de Toulon et Gênes).

D'un point de vue militaire, l'invention permet notamment d'établir des cartes instantanées ou historiques de densité de populations de cétacés pour ne pas interférer avec les cétacés lors des essais militaires. De même pour les activités de pêche, l'usage des répulseurs acoustiques étant peu fiable, l'invention permet de connaître en temps réel la présence de cétacés lors de la pêche et de manoeuvrer en conséquence.

Du point de vue civil (ferry) et de la marine marchande, l'invention permet de détecter la présence de cétacés sur les routes maritimes commerciales, afin d'éviter les collisions entre cétacés et bateaux.

Ainsi il est possible de mieux apprécier la présence des mammifères qui fréquentent une zone tout au long de l'année et ainsi de contribuer à leur protection, mais aussi à une meilleure gestion militaire du milieu.

Grâce à l'invention, il est également possible de surveiller une zone sensible donnée, comme les zones d'aquaculture, les ports etc., et d'y faire de la détection d'intrusion par des cétacés, en détectant leurs clics et en comparant le signal détecté à un seuil d'alerte. Il suffit d'installer dans la zone 4 ou 5 hydrophones fixes reliés à la côte par des moyens de communication filaires ou sans fil, et d'alimenter avec les signaux issus des hydrophones, un serveur apte à exécuter le procédé de trajectographie selon l'invention et à calculer des seuils d'alerte. On associe donc le système de trajectographie à des moyens d'alerte aptes à émettre un signal d'alerte lorsque des clics correspondants à la présence d'un ou de plusieurs cétacés sont détectés sur le signal provenant des hydrophones placés dans ladite zone.

**Revendications**

**1.** Procédé de trajectographie par voie passive d'au moins un animal marin émettant des signaux sonores sous forme de trains de clics, notamment au moins un cétacé, dans lequel on procède pendant des fenêtres de temps de traitement successives, à l'acquisition (11) des signaux bruts analogiques en provenance d'une pluralité de H hydrophones disposés dans le milieu marin, puis on convertit ces données analogiques brutes en données numériques par échantillonnage à une certaine fréquence d'échantillonnage Fe, ledit procédé comportant en outre des étapes suivantes effectuées en temps réel:

    a. un filtrage (13,14) des données numériques apte à éliminer les bruits parasites et à garder (15,16) parmi les données numériques, celles qui correspondent pour chaque couple d'hydrophones et chaque fenêtre de traitement, à des valeurs potentielles de différences de temps d'arrivée des signaux sonores pour atteindre deux hydrophones distincts, ces valeurs potentielles étant notées TDOA ;
    b. pour chaque couple d'hydrophones, on vérifie (17) la cohérence des TDOA obtenus, et on garde (18) un nombre, noté nbTDOA, de TDOA filtrés et cohérents entre eux ;
    c. à partir des nbTDOA TDOA filtrés et cohérents entre eux, on détermine par régression non linéaire (19) les positions instantanées successives des sources des clics, et on en déduit (20) en temps réel la trajectoire dudit au moins un animal marin dans son milieu, ledit procédé étant **caractérisé en ce qu'**il comporte en outre une étape de suppression des échos, consistant à :

- déterminer l'enveloppe du signal filtré ;
- intégrer cette enveloppe sur des fenêtres de temps et comparer le résultat à un seuil prédéterminé ;
- si ledit résultat est inférieur audit seuil prédéterminé, le signal correspondant est un clic et est conservé, et si ledit résultat est supérieur audit seuil prédéterminé, le signal correspondant est un écho et est éliminé.

2.  Procédé de trajectographie selon la revendication 1, **caractérisé en ce qu'**il comporte une étape consistant à appliquer l'opérateur dit de Teager-Kaiser aux données numériques correspondant au signal brut, de façon à obtenir en sortie de ce traitement un signal composé de pics ayant une amplitude amplifiée, et un bruit bruit additif gaussien.

3.  Procédé de trajectographie selon la revendication 2, **caractérisé en ce que** dans le cas où la fréquence d'échantillonnage des signaux acquis est très supérieure à l'inverse de la durée d'un clic, on procède avant le filtrage à une étape dite de décimation par calcul de moyenne, consistant à remplacer N échantillons analogiques consécutifs par leur moyenne, de façon à obtenir un signal de fréquence N fois plus faible, ainsi qu'un bruit de variance réduit N fois mais avec des amplitudes de signal plus fortes par rapport au bruit.

4.  Procédé de trajectographie selon l'une quelconque des revendications 2 ou 3, **caractérisé en ce que** l'étape de filtrage comporte une étape consistant à appliquer aux valeurs numériques issues de l'étape de filtrage par l'opérateur de Teager Kaiser et de l'étape de décimation, un algorithme dit de Mallat avec un seuil universel, consistant à conserver les n plus forts pics dus aux clics potentiels de la source, et à déterminer à partir de la position de ces pics, les TDOA potentiels correspondants aux clics de la source.

5.  Procédé de trajectographie selon la revendication 1, **caractérisé en ce que** l'étape de filtrage comporte une étape de filtrage adapté stochastique pour détecter les clics.

6.  Procédé de trajectographie selon la revendication 4 ou la revendication 5, **caractérisé en ce qu'**on choisit un nombre n de TDOA à conserver dans l'étape de détermination des TDOA, qui soit supérieur ou égal à 5 et inférieur ou égal à 35.

7.  Procédé de trajectographie selon l'une quelconque des revendications précédentes, **caractérisé en ce que** pour déterminer les TDOA cohérents entre eux, on conserve parmi les TDOA correspondant potentiellement à des clics de la source, ceux qui vérifient le principe de transition des TDOA et satisfont au système d'équations :

$$TDOA_u(i,j) + TDOA_v(j,k) \simeq TDOA_w(i,k) \pm er,$$

$$TDOA_u(i,j) + TDOA_x(j,h) \simeq TDOA_y(i,h) \pm er,$$

$$TDOA_w(i,k) + TDOA_z(k,h) = TDOA_y(i,h) \pm er,$$

$$TDOA_v(j,k) + TDOA_z(k,h) = TDOA_x(j,h) \pm er.$$

où er égale à trois fois l'incertitude engendrée par la décimation du signal brut, et $TDOA_x(i,j)$ désigne le xième TDOA potentiel entre les hydrophones i et j.

8.  Procédé de trajectographie selon l'une quelconque des revendications précédentes, caractéris en ce que l'étape (21) de calcul et de suppression d'écho consiste à éliminer les TDOA vérifiant les relations suivantes:

$$TDOA_x(i,j) - TDOA_1(i,j) = k * E(i) \pm 0.002, k = \{1,2\}, x \in \{2..nbTDOA\}$$

$$TDOA_x(i,j) - TDOA_1(i,j) \quad = \quad \sim k * E(j) \pm 0.002, k = \{1,2\}, x \in \{2..nbTDOA\}$$

où $TDOA_x(i,j)$ désigne le xième TDOA potentiel entre les hydrophones i et j, E(i) désigne la différence de temps entre le clic et l'écho sur l'hydrophone i, k est un entier égal à 1 ou 2, i, j sont des entiers inférieurs ou égaux au nombre H d'hydrophones, x est un entier compris entre 2 et NBTDOA.

9. Procédé de trajectographie selon l'une quelconque des revendications précédentes, **caractérisé en ce que** pour déterminer à partir des TDOA cohérents, la position instantanée Xs(t) d'un cétacé émettant un clic, on opère une régression non linéaire selon l'algorithme de Gauss-Newton en utilisant les trois TDOA indépendants {$TDOA_u(i, j)$, $TDOA_w(i, k)$, $TDOA_y(i, h)$} de chaque quadruplet d'hydrophones, (i, j, k, h) pour minimiser l'erreur LMS (Least Mean Square) dans le système des trois équations suivantes :

$$Q(X_s, X_i) - Q(X_s, X_j) \quad = \quad TDOA_u(i,j) * c,$$

$$Q(X_s, X_i) - Q(X_s, X_k) \quad = \quad TDOA_w(i,k) * c,$$

$$Q(X_s, X_i) - Q(X_s, X_h) \quad = \quad TDOA_y(i,h) * c,$$

où $Q(X_s, X_a)$ est la distance euclidienne entre la source de coordonnées inconnues $X_s = \begin{bmatrix} x \\ y \\ y \end{bmatrix}_s$ et l'hydrophone de coordonnées $X_a$ connues et $c$ représente la célérité de l'onde.

10. Procédé de trajectographie selon la revendication 9, **caractérisé en ce qu'**on détermine la trajectoire dudit cétacé à partir des positions instantanées Xs(t) successives.

11. Système de trajectographie par voie passive d'une pluralité de cétacés, **caractérisé en ce qu'**il comporte :

a. un réseau d'au moins quatre hydrophones disposés dans l'eau dans la zone de détection, chaque hydrophone étant connecté à une carte d'acquisition et de numérisation des signaux acoustiques détectés par les hydrophones ;
b. un ordinateur connecté aux cartes d'acquisition et hébergeant un logiciel applicatif de détection mettant en oeuvre les étapes du procédé de détection selon l'une quelconque des revendications 1 à 10.

12. Utilisation du procédé de trajectographie par voie passive selon l'une quelconque des revendications 1 à 10, **caractérisé en ce qu'**on équipe une zone de mer à surveiller avec un système de trajectographie selon la revendication 11, et on l'associe à des moyens d'alerte aptes à émettre un signal d'alerte lorsque des clics correspondants à la présence d'un ou de
plusieurs cétacés sont détectés sur le signal provenant des hydrophones placés dans ladite zone.

**Claims**

1. Method for passive tracking of at least one marine animal emitting sound signals in the form of trains of clicks, notably at least one cetacean, which method includes, during successive processing time windows, acquiring (11) raw analogue signals from a plurality of H hydrophones disposed in the marine environment, after which this raw analogue data is converted into digital data by sampling at a certain sampling frequency Fe, said method further including the following steps effected in real time:

a. filtering (13, 14) the digital data to eliminate unwanted noise and to retain (15, 16) the digital data for each pair of hydrophones and each processing window that corresponds to potential values TDOA of time differences of arrival of the sound signals to reach two different hydrophones;

b. for each pair of hydrophones, versifying (17) the consistency of the TDOA obtained and retaining (18) a number nbTDOA of filtered and mutually consistent TDOA;

c. from the nbTDOA filtered and mutually consistent TDOA, determining (19) by non-linear regression the successive instantaneous positions of the sources of the clicks and deducing (20) in real time the track of said at least one marine animal in its environment, said method being **characterized in that** it further includes a step of suppressing echoes, consisting in:

- determining the envelope of the filtered signal;
- integrating this envelope over time windows and comparing the result to a predetermined threshold;
- if said result is below said predetermined threshold, the corresponding signal is a click and is retained, and if said result is above said predetermined threshold, the corresponding signal is an echo and is eliminated.

2. Tracking method according to Claim 1, **characterized in that** it includes a step consisting in applying the so-called Teager-Kaiser operator to the digital data corresponding to the raw signal to obtain after this processing a signal composed of peaks having an amplified amplitude and additive Gaussian noise.

3. Tracking method according to Claim 2, **characterized in that** if the sampling frequency of the acquired signals is very much higher than the reciprocal of the duration of a click, filtering is preceded by a so-called decimation step by calculating a mean value, consisting in replacing N consecutive analogue samples by their mean value to obtain a signal of N times lower frequency and variance noise reduced N times but with greater signal amplitudes relative to noise.

4. Tracking method according to either one of Claims 2 and 3, **characterized in that** the filtering step includes a step consisting in applying to the digital values produced in the step of filtering by the Teager Kaiser operator and the decimation step a so-called Mallat algorithm with a universal threshold, consisting in retaining the highest n peaks caused by the potential clicks from the source and in determining from the position of these peaks the potential TDOA corresponding to the clicks from the source.

5. Trajectographic method according to Claim 1, **characterized in that** the filtering step includes a step of adapted stochastic filtering for detecting the clicks.

6. Tracking method according to Claim 4 or Claim 5, **characterized in that** a number n of TDOA to be retained in the TDOA determination step is chosen that is greater than or equal to 5 and less than or equal to 35.

7. Trajectographic method according to any one of the preceding claims, **characterized in that** to determine the mutually consistent TDOA there are retained from the TDOA potentially corresponding to clicks from the source those that satisfy the principle of TDOA transition and satisfy the system of equations:

$$TDOA_u(i,j) + TDOA_v(j,k) = TDOA_w(i,k) \pm er,$$

$$TDOA_u(i,j) + TDOA_x(j,h) = TDOA_y(i,h) \pm er,$$

$$TDOA_w(i,k) + TDOA_z(k,h) = TDOA_y(i,h) \pm er,$$

$$TDOA_v(j,k) + TDOA_z(k,h) = TDOA_x(j,h) \pm er,$$

in which er is equal to three times the uncertainty generated by decimating the raw signal and $TDOA_x(i,j)$ designates the $x^{th}$ potential TDOA between the hydrophones i and j.

8. Tracking method according to any one of the preceding claims, **characterized in that** the calculation and echo suppression step (21) consists in eliminating the TDOA satisfying the following relations:

$$TDOA_x(i,j) - TDOA_1(i,j) \quad = \quad k * E(i) \pm 0.002, k = \{1,2\}, x \in \{2..nbTDOA\}$$

$$TDOA_x(i,j) - TDOA_1(i,j) \quad = \quad -k * E(j) \pm 0.002, k = \{1,2\}, x \in \{2..nbTDOA\}$$

in which $TDOA_x(i,j)$ designates the $x^{th}$ potential TDOA between the hydrophones i and j, E(i) designates the time difference between the click and the echo at the hydrophone i, k is an integer equal to 1 or 2, i, j are integers less than or equal to the number H of hydrophones, and x is an integer between 2 and nbTDOA.

9. Tracking method according to any one of the preceding claims, **characterized in that** to determine from the consistent TDOA the instantaneous position Xs(t) of a cetacean emitting a click, non-linear regression using the Gauss-Newton algorithm is applied employing the three independent TDOA {$TDOA_u(i, j)$, $TDOA_w(i, k)$, $TDOA_y(i, h)$)} of each quadruplet of hydrophones (i, j, k, h) to minimize the least mean square (LMS) error in the following system of three equations:

$$Q(X_s, X_i) - Q(X_s, X_j) \quad = \quad TDOA_u(i,j) * c,$$

$$Q(X_s, X_i) - Q(X_s, X_k) \quad = \quad TDOA_w(i,k) * c,$$

$$Q(X_s, X_i) - Q(X_s, X_h) \quad = \quad TDOA_y(i,h) * c,$$

in which $Q(X_s, X_a)$ is the Euclidian distance between the source with unknown coordinates $X_s = \begin{bmatrix} x \\ y \\ y \end{bmatrix}_s$ and the hydrophone with known coordinates $X_a$ and c represents the speed of the wave.

10. Tracking method according to Claim 9, **characterized in that** the track of said cetacean is determined from successive instantaneous positions Xs(t).

11. Passive tracking system for a plurality of cetaceans, **characterized in that** it includes:

   a. an array of at least four hydrophones disposed in the water in the detection area, each hydrophone being connected to a card for acquiring and digitizing the acoustic signals detected by the hydrophones;
   b. a computer connected to the acquisition cards and hosting detection application software implementing the steps of the detection method according to any one of Claims 1 to 10.

12. Use of the passive tracking method according to any one of Claims 1 to 10, **characterized in that** an area of sea to be monitored is equipped with a tracking system according to Claim 11 and associated with alert means adapted to emit an alert signal if clicks corresponding to the presence of one or more cetaceans is detected in the signal coming from the hydrophones placed in said area.

**Patentansprüche**

1. Verfahren zur passiven Bahnverfolgung mindestens eines Meerestiers, das Schallsignale in Form von Folgen von Klicklauten aussendet, insbesondere mindestens eines Wals, bei dem während aufeinanderfolgender Verarbeitungszeitfenster die Erfassung (11) der analogen Rohsignale durchgeführt wird, die von einer Vielzahl von H in der Meeresumwelt angeordneten Hydrophonen stammen, dann diese analogen Rohdaten durch Abtasten mit einer bestimmten Abtastfrequenz Fe in digitale Daten umgewandelt werden, wobei das Verfahren außerdem folgende in Echtzeit ausgeführte Schritte aufweist:

a. eine Filterung (13, 14) der digitalen Daten, die die Störgeräusche entfernen und unter den digitalen Daten diejenigen behalten kann (15, 16), die für jedes Paar von Hydrophonen und jedes verarbeitungsfenster potentiellen Werten von Ankunftszeitdifferenzen der Schallsignale zum Erreichen von zwei unterschiedlichen Hydrophonen entsprechen, wobei diese potentiellen Werte mit TDOA bezeichnet werden;

b. für jedes Paar von Hydrophonen wird die Kohärenz der erhaltenen TDOA überprüft (17), und es wird eine mit nbTDOA bezeichnete Anzahl von gefilterten und miteinander kohärenten TDOA behalten (18);

c. ausgehend von den gefilterten und miteinander kohärenten nbTDOA TDOA werden durch nichtlineare Regression (19) die aufeinanderfolgenden augenblicklichen Positionen der Quellen der Klicklaute bestimmt, und es wird in Echtzeit die Bahn des mindestens einen Meerestiers in seiner Umgebung abgeleitet (20), wobei das Verfahren **dadurch gekennzeichnet ist, dass** es außerdem einen Schritt der Echounterdrückung aufweist, der darin besteht:

- die Hüllkurve des gefilterten Signals zu bestimmen;
- diese Hüllkurve in zeitfenster zu integrieren und das Ergebnis mit einer vorgegebenen Schwelle zu vergleichen;
- wenn das Ergebnis unter der vorbestimmten Schwelle liegt, ist das entsprechende Signal ein Klicklaut und wird behalten, und wenn das Ergebnis über der vorbestimmten Schwelle liegt, ist das entsprechende Signal ein Echo und wird unterdrückt.

2. Bahnverfolgungsverfahren nach Anspruch 1, **dadurch gekennzeichnet, dass** es einen Schritt aufweist, der darin besteht, den so genannten Teager-Kaiser-Operator an den dem Rohsignal entsprechenden digitalen Daten anzuwenden, um am Ausgang dieser Verarbeitung ein aus Spitzen mit einer verstärkten Amplitude zusammengesetztes Signal und ein Gauß'sches Zusatzrauschen zu erhalten.

3. Bahnverfolgungsverfahren nach Anspruch 2, **dadurch gekennzeichnet, dass** in dem Fall, in dem die Abtastfrequenz der erfassten Signale sehr viel höher ist als der Kehrwert der Dauer eines Klicklauts, vor der Filterung ein so genannter Dezimierungsschritt durch Mittelwertberechnung durchgeführt wird, der darin besteht, N aufeinanderfolgende analoge Tastproben durch ihren Mittelwert zu ersetzen, um ein Signal einer N Mal schwächeren Frequenz sowie ein N Mal reduziertes Varianzrauschen, aber mit stärkeren Signalamplituden bezüglich des Rauschens, zu erhalten.

4. Bahnverfolgungsverfahren nach einem der Ansprüche 2 oder 3, **dadurch gekennzeichnet, dass** der Filterungsschritt einen Schritt enthält, der darin besteht, an die vom Filterungsschritt durch den Teager-Kaiser-Operator und vom Dezimierungsschritt stammenden digitalen Werte einen so genannten Mallat-Algorithmus mit einer universellen Schwelle anzuwenden, der darin besteht, die n stärksten durch die potentiellen Klicklaute der Quelle verursachten Spitzen zu behalten und ausgehend von der Position dieser Spitzen die den Klicklauten der Quelle entsprechenden potentiellen TDOA zu bestimmen.

5. Bahnverfolgungsverfahren nach Anspruch 1, **dadurch gekennzeichnet, dass** der Filterungsschritt einen geeigneten stochastischen Filterungsschritt enthält, um die Klicklaute zu erkennen.

6. Bahnverfolgungsverfahren nach Anspruch 4 oder Anspruch 5, **dadurch gekennzeichnet, dass** im Schritt der Bestimmung der TDOA eine Anzahl n von zu behaltenden TDOA gewählt wird, die höher als oder gleich 5 und niedriger als oder gleich 35 ist.

7. Bahnverfolgungsverfahren nach einem der vorhergehenden Ansprüche, **dadurch gekennzeichnet, dass** zur Bestimmung der miteinander kohärenten TDOA unter den potentiell Klicklauten der Quelle entsprechenden TDOA diejenigen behalten werden, die das Übergangsprinzip der TDOA bestätigen und das Gleichungssystem erfüllen:

$$TDOA_u(i,j) + TDOA_v(j,k) = TDOA_w(i,k) \pm er,$$

$$TDOA_u(i,j) + TDOA_x(j,h) = TDOA_y(i,h) \pm er,$$

$$TDOA_w(i,k) + TDOA_z(k,h) = TDOA_y(i,h) \pm er,$$

$$TDOA_v(j,k) + TDOA_z(k,h) = TDOA_x(j,h) \pm er$$

wobei er gleich dem Dreifachen der von der Dezimierung des Rohsignals erzeugte Unsicherheit ist, und $TDOA_x(i, j)$ die x-te potentielle TDOA zwischen den Hydrophonen i und j ist.

8. Bahnverfolgungsverfahren nach einem der vorhergehenden Ansprüche, **dadurch gekennzeichnet, dass** der Schritt (21) der Echoberechnung und

- unterdrückung darin besteht, die TDOA zu unterdrücken, die die folgenden Beziehungen bestätigen:

$$TDOA_x(i,j) - TDOA_1(i,j) = k*E(i) \pm 0.002, k = \{1,2\}, \ x \in \{2..nbTDOA\}$$

$$TDOA_x(i,j) - TDOA_1(i,j) = -k*E(j) \pm 0.002, k = \{1,2\}, \ x \in \{2..nbTDOA\}$$

wobei $TDOA_x(i,j)$ die x-te potentielle TDOA zwischen den Hydrophonen i und j bezeichnet, E(i) die Zeitdifferenz zwischen dem Klicklaut und dem Echo im Hydrophon i bezeichnet, k eine ganze Zahl gleich 1 oder 2 ist, i,j ganze Zahlen kleiner als oder gleich der Anzahl H von Hydrophonen sind, x eine ganze Zahl zwischen 2 und der Anzahl NBTDOA ist.

9. Bahnverfolgungsverfahren nach einem der vorhergehenden Absprüche, **dadurch gekennzeichnet, dass** zur Bestimmung, ausgehend von den kohärenten TDOA, der augenblicklichen Position Xs(t) eines einen Klicklaut aussendenden Wals, eine nichtlineare Regression gemäß dem Gauß-Newton-Algorithmus durchgeführt wird, indem die drei unabhängigen TDOA $\{TDOA_u(i,j), TDOA_w(i,k), TDOA_y(i,h)\}$ jedes Quadrupels von Hydrophonen (i, j, k, h) verwendet werden, um den Fehler LMS (Least Mean square) in dem System der drei folgenden Gleichungen zu minimieren:

$$Q(X_s, X_i) - Q(X_s, X_j) = TDOA_u(i,j)*c,$$

$$Q(X_s, X_i) - Q(X_s, X_k) = TDOA_w(i,k)*c,$$

$$Q(X_s, X_i) - Q(X_s, X_h) = TDOA_y(i,h)*c,$$

wobei $Q(X_s, X_a)$ der euklidische Abstand zwischen der Quelle unbekannter Koordinaten $X_s = \begin{bmatrix} x \\ y \\ y \end{bmatrix}_s$ und dem Hydrophon bekannter Koordinaten $X_a$ ist, und c die Geschwindigkeit der Welle darstellt.

10. Bahnverfolgungsverfahren nach Anspruch 9, **dadurch gekennzeichnet, dass** die Bahn des Wals ausgehend von den aufeinanderfolgenden augenblicklichen Positionen Xs(t) bestimmt wird.

11. Passives Bahnverfolgungssystem einer Vielzahl von Walen, **dadurch gekennzeichnet, dass** es aufweist:

a. ein Netz von mindestens vier Hydrophonen, die im Wasser in der Erkennungszone angeordnet sind, wobei jedes Hydrophon mit einer Erfassungs- und Digitalisierungskarte der von den Hydrophonen erkannten akustischen Signale verbunden ist;

b. einen Computer, der mit den Erfassungskarten verbunden ist und in dem eine Erkennungs-Anwendungssoftware untergebracht ist, die die Schritte des Erkennungsverfahrens nach einem der Ansprüche 1 bis 10 durchführt.

12. Verwendung des passiven Bahnverfolgungsverfahrens nach einem der Ansprüche 1 bis 10, **dadurch gekennzeichnet, dass** eine zu überwachende Meereszone mit einem Bahnverfolgungssystem nach Anspruch 11 ausgestattet und Warneinrichtungen zugeordnet wird, die in der Lage sind, ein Warnsignal auszusenden, sobald Klicklaute, die der Anwesenheit eines oder mehrerer Wale entsprechen, in dem Signal erkannt werden, das von den in der Zone angeordneten Hydrophonen kommt.

Hydrophones

Acquisition
des signaux
numériques

FIGURE 1

Filtrage

Calcul
d'échos

Détermination
des TDOA

Détermination
des TDOA
cohérents

Régression

Position (x,y,z)(t)

FIGURE 2 : Principe de transitivité des TDOA illustré pour TDOA(i,j), TDOA(j,h) et TDOA(i,h). Les indices u, v, w, x, y, z indexent le rang de chaque TDOA extrait de l'intercorrélation du couple d'hydrophones concerné.

$$TDOA\,_u(i, j) + TDOA\,_v(j, k) = TDOA\,_w(i, k) \pm 0.006,$$

$$TDOA\,_u(i, j) + TDOA\,_x(j, h) = TDOA\,_y(i, h) \pm 0.006,$$

$$TDOA\,_w(i, k) + TDOA\,_z(k, h) = TDOA\,_y(i, h) \pm 0.006,$$

$$TDOA\,_v(j, k) + TDOA\,_z(k, h) = TDOA\,_x(j, h) \pm 0.006.$$

FIGURE 3.1 : clic d'une seule baleine sur le signal brut

FIGURE 3.2 : clic d'une seule baleine après filtrage avec l'algorithme de Teager-kaiser

FIGURE 3.3 : clic d'une seule baleine après décimation

FIGURE 4.1 : Train de clics avant filtrage par l'algorithme de Teager-Kaiser, du signal réel d'une seule baleine

FIGURE 4.2 : Train de clics après filtrage par l'algorithme de Teager-Kaiser, du signal réel d'une seule baleine

FIGURE 5: Train de clics d'une seule baleine sur le signal brut après filtrage Teager Kaiser + décimation (Figure d'après signal réel d'une seule baleine)

FIGURE 6.1 : Train de clics d'une seule baleine sur le signal brut après l'algorithme de Mallat (puis racine carrée) ; Figure d'après signal réel d'une seule baleine

FIGURE 6.2: Train de clics d'une seule baleine sur le signal brut après filtrage adapté stochastique (FAS) ; Figure d'après signal réel d'une seule baleine

FIGURE 6.3 : grossissement de Figure 6.2 sur un écho suivi d'un clic

FIGURE 7 : Calcul des TDOA (Time Delay Of Arrival) – Figure d'après signal réel d'une seule baleine. Les 5 premiers TDOA conservés sont fléchés.

FIGURE 8.1 : effets / détection des échos sur signal de la figure 7 : les effets des échos E(1) et E(2) sont représentés. Figure d'après signal réel d'une seule baleine

FIGURE 8.2 : signal absolu d'un écho

FIGURE 8.3 : signal de la Figure 8.2 moyenné

FIGURE 8.4 : signal absolu d'un clic

FIGURE 8.5 : signal absolu moyenné du clic de la figure 8.4

FIGURE 9: signal brut : train de clics de plusieurs baleines avec du bruit : données réelles enregistrées durant 20 minutes par 4 hydrophones

FIGURE 10 : Positions calculées pour nbTDOA=13 , 4 baleines sont visibles en (x, y,z) Un symbole différent par baleine identifiée. [calculs faits sur données réelles durant 20 minutes par 4 hydrophones ] (avec méthode de filtrage Teager Kaiser Mallat).

FIGURE 11 : Positions de 4 (ou 5) baleines en (x, y,z) d'après résultats avec nbTDOA=35 [ calculées sur les données réelles identiques à la figure 10]. Le passage de nbTDOA de 13 à 35 accroît la précision (avec méthode de filtrage TK Mallat).

FIGURE 12 : Représentation de trajectoires après lissage (avec méthode de filtrageTK Mallat)

FIGURE 13 : Application de la localisation des baleines à l'étude de leur comportement